# EUROPEAN PATENT APPLICATION

(11) **EP 4 301 004 A1**
(43) Date of publication of application: **03.01.2024**
(21) Application number: 22759561.8
(22) Date of filing: 21.02.2022
(51) Int. Cl.: H04W 4/06, H04W 28/04

(54) **COMMUNICATION SYSTEM AND COMMUNICATION TERMINAL**

(30) Priority: 25.02.2021 JP 2021028743
(71) Applicant: Mitsubishi Electric Corporation, Tokyo 100-8310 (JP)
(72) Inventor: SHIMODA, Tadahiro, Tokyo 100-8310 (JP); MOCHIZUKI, Mitsuru, Tokyo 100-8310 (JP)
(74) Representative: Meissner Bolte Partnerschaft mbB
(86) International application number: PCT/JP2022/006883
(87) International publication number: WO 2022/181525

(57) **Abstract**

In order to implement a communication system capable of quickly securing reliability in multicast, the communication system includes: a base station conforming to New Radio Access Technology; and a communication terminal (UE) capable of performing multicast communication with the base station. While executing the multicast communication, the communication terminal transmits reception status information to the base station in communication with the communication terminal, the reception status information being information related to a data reception status, and the base station performs control of retransmission of data to the communication terminal on the basis of the reception status information.

## Description

### Field

The present disclosure relates to wireless communication technology.

### Background

In the 3rd Generation Partnership Project (3GPP), which is an association for standardizing mobile communication systems, a communication scheme called Long Term Evolution (LTE) has been developed for wireless sections, and a communication scheme called System Architecture Evolution (SAE) has been developed for overall system configurations including core networks and wireless access networks (hereinafter may be collectively referred to as networks) (for example, see Non Patent Literatures 1 to 5). This type of communication scheme is also called 3.9 Generation (3.9G) systems.

As LTE access schemes, Orthogonal Frequency Division Multiplexing (OFDM) is used for downlink, and Single Carrier Frequency Division Multiple Access (SC-FDMA) is used for uplink. Unlike Wideband Code Division Multiple Access (W-CDMA), LTE does not include circuit switching, but supports only packet communication.

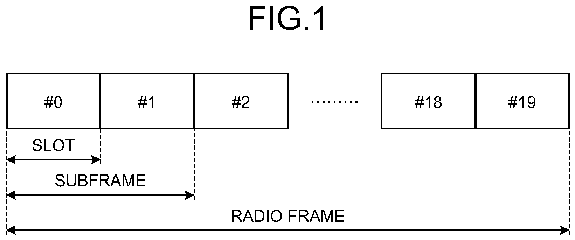

The 3GPP agreements regarding frame configurations for LTE systems described in Non Patent Literature 1 (Chapter 5) will be described with reference to FIG. 1. FIG. 1 is an explanatory diagram illustrating a configuration of a radio frame for use in an LTE-based communication system. In FIG. 1, one radio frame is 10 ms long. A radio frame is divided into 10 equally sized subframes. A subframe is divided into two equally sized slots. Downlink synchronization signals are included in the first and sixth subframes of each radio frame. The synchronization signals are classified as primary synchronization signals (P-SS) and secondary synchronization signals (S-SS).

The 3GPP agreements regarding channel configurations for LTE systems are described in Non Patent Literature 1 (Chapter 5). A closed subscriber group (CSG) cell is assumed to use the same channel configuration as a non-CSG cell.

Physical Broadcast Channel (PBCH) is a channel for downlink transmission from base station devices (hereinafter may be simply referred to as "base stations") to communication terminal devices (hereinafter may be simply referred to as "communication terminals") such as mobile terminal devices (hereinafter may be simply referred to as "mobile terminals"). BCH transport blocks are mapped to four subframes within a 40 ms interval. There is no explicit signaling for 40 ms timing.

Physical Control Format Indicator Channel (PCFICH) is a channel for downlink transmission from base stations to communication terminals. The PCFICH provides the number of orthogonal frequency division multiplexing (OFDM) symbols for use in PDCCHs from base stations to communication terminals. The PCFICH is transmitted in every subframe.

Physical Downlink Control Channel (PDCCH) is a channel for downlink transmission from base stations to communication terminals. The PDCCH provides resource allocation information of Downlink Shared Channel (DL-SCH), which is one of the transport channels to be described later, resource allocation information of Paging Channel (PCH), which is one of the transport channels to be described later, and hybrid automatic repeat request (HARQ) information related to the DL-SCH. The PDCCH carries an uplink scheduling grant. The PDCCH carries acknowledgement (Ack)/negative acknowledgement (Nack) as a response signal to uplink transmission. The PDCCH is also called a L1/L2 control signal.

Physical Downlink Shared Channel (PDSCH) is a channel for downlink transmission from base stations to communication terminals. Downlink shared channel (DL-SCH) and PCH, which are transport channels, are mapped to the PDSCH.

Physical Multicast Channel (PMCH) is a channel for downlink transmission from base stations to communication terminals. Multicast Channel (MCH), which is a transport channel, is mapped to the PMCH.

Physical Uplink Control Channel (PUCCH) is a channel for uplink transmission from communication terminals to base stations. The PUCCH carries Ack/Nack as a response signal to downlink transmission. The PUCCH carries channel state information (CSI). The CSI includes rank indicator (RI), precoding matrix indicator (PMI), and channel quality indicator (CQI) report. The RI is rank information of a MIMO channel matrix. The PMI is information of a precoding weight matrix for use in MIMO. The CQI is quality information indicating the quality of received data or channel quality. The PUCCH also carries a scheduling request (SR).

Physical Uplink Shared Channel (PUSCH) is a channel for uplink transmission from communication terminals to base stations. To the PUSCH, Uplink Shared Channel (UL-SCH) is mapped as one of the transport channels.

Physical Hybrid ARQ (HARQ) Indicator Channel (PHICH) is a channel for downlink transmission from base stations to communication terminals. The PHICH carries Ack/Nack as a response signal to uplink transmission. Physical Random Access Channel (PRACH) is a channel for uplink transmission from communication terminals to base stations. The PRACH carries a random access preamble.

Downlink reference signals (RS) are known as symbols for LTE-based communication systems. The following five types of downlink reference signals are defined: Cell-specific reference signals (CRS), MBSFN reference signals, demodulation reference signals (DM-RS) as UE-specific reference signals, positioning reference signals (PRS), and channel state information reference signals (CSI-RS). Reference signal received power (RSRP) measurement is a measure of the physical layer of communication terminals.

Similarly, uplink reference signals are known as symbols for LTE-based communication systems. The following two types of uplink reference signals are defined: Demodulation reference signals (DM-RS) and sounding reference signals (SRS).

The transport channels described in Non Patent Literature 1 (Chapter 5) will be described. Among the downlink transport channels, Broadcast Channel (BCH) is broadcast to the entire coverage of the base station (cell). The BCH is mapped to Physical Broadcast Channel (PBCH).

Retransmission control by Hybrid ARQ (HARQ) is applied to Downlink Shared Channel (DL-SCH). The DL-SCH can be broadcast to the entire coverage of the base station (cell). The DL-SCH supports dynamic or semi-static resource allocation. Semi-static resource allocation is also called persistent scheduling. The DL-SCH supports discontinuous reception (DRX) at communication terminals in order to reduce the power consumption of the communication terminals. The DL-SCH is mapped to the physical downlink shared channel (PDSCH).

Paging Channel (PCH) supports DRX at communication terminals so that the power consumption of the communication terminals can be reduced. The PCH is required to be broadcast to the entire coverage of the base station (cell). The PCH is mapped to physical resources such as the physical downlink shared channel (PDSCH) dynamically available for traffic.

Multicast Channel (MCH) is used for broadcast to the entire coverage of the base station (cell). The MCH supports the SFN combining of multimedia broadcast multicast service (MBMS) services (MTCH and MCCH) in multicell transmission. The MCH supports semi-static resource allocation. The MCH is mapped to the PMCH.

Retransmission control by Hybrid ARQ (HARQ) is applied to Uplink Shared Channel (UL-SCH) among the uplink transport channels. The UL-SCH supports dynamic or semi-static resource allocation. The UL-SCH is mapped to Physical Uplink Shared Channel (PUSCH).

Random Access Channel (RACH) is limited to control information. The RACH has a risk of collision. The RACH is mapped to Physical Random Access Channel (PRACH).

HARQ will be described. HARQ is a technology for improving the communication quality of transmission paths by combining automatic repeat request (ARQ) and forward error correction. HARQ is advantageous for transmission paths with changing communication quality because error correction effectively functions through retransmission. In particular, further improvement in quality can be obtained through retransmission by combining the reception result of the first transmission and the reception result of the retransmission.

An example of a retransmission method will be described. If the reception side cannot correctly decode the received data, in other words, if a cyclic redundancy check (CRC) error occurs (CRC=NG), then "Nack" is transmitted from the reception side to the transmission side. Upon receiving "Nack", the transmission side retransmits the data. If the reception side can correctly decode the received data, in other words, if no CRC error occurs (CRC=OK), then "Ack" is transmitted from the reception side to the transmission side. Upon receiving "Ack", the transmission side transmits the next data.

The logical channels described in Non Patent Literature 1 (Chapter 6) will be described. Broadcast Control Channel (BCCH) is a downlink channel for broadcast system control information. The BCCH, which is a logical channel, is mapped to a transport channel: broadcast channel (BCH) or downlink shared channel (DL-SCH).

Paging Control Channel (PCCH) is a downlink channel for transmitting a change in paging information and system information. The PCCH is used when the network does not know the cell location of a communication terminal. The PCCH, which is a logical channel, is mapped to Paging Channel (PCH), which is a transport channel.

Common Control Channel (CCCH) is a channel for transmission control information between communication terminals and base stations. The CCCH is used when a communication terminal does not have an RRC connection with the network. In downlink, the CCCH is mapped to the downlink shared channel (DL-SCH), which is a transport channel. In the uplink direction, the CCCH is mapped to the uplink shared channel (UL-SCH), which is a transport channel.

Multicast Control Channel (MCCH) is a downlink channel for one-to-many transmission. The MCCH is used for transmission of MBMS control information for one or several MTCHs from the network to communication terminals. The MCCH is used only for communication terminals that are receiving MBMS. The MCCH is mapped to the multicast channel (MCH), which is a transport channel.

Dedicated Control Channel (DCCH) is a channel for transmitting dedicated control information between communication terminals and the network on a one-to-one basis. The DCCH is used when the communication terminal is in an RRC connection. The DCCH is mapped to the uplink shared channel (UL-SCH) in uplink, and is mapped to the downlink shared channel (DL-SCH) in downlink.

Dedicated Traffic Channel (DTCH) is a channel for one-to-one communication with individual communication terminals for transmitting user information. The DTCH exists in both uplink and downlink. The DTCH is mapped to the uplink shared channel (UL-SCH) in uplink, and is mapped to the downlink shared channel (DL-SCH) in downlink.

Multicast Traffic Channel (MTCH) is a downlink channel for traffic data transmission from the network to communication terminals. The MTCH is a channel used only for communication terminals that are receiving MBMS. The MTCH is mapped to the multicast channel (MCH).

CGI stands for Cell Global Identifier. ECGI stands for E-UTRAN Cell Global Identifier. In LTE, Long Term Evolution-Advanced (LTE-A) described later, and the Universal Mobile Telecommunication System (UMTS), closed subscriber group (CSG) cells are introduced.

The position tracking of a communication terminal is performed in units of segments each consisting of one or more cells. The position tracking is performed to track the position of the communication terminal even in the idle state and call the communication terminal, in other words, enable the communication terminal to receive a call. Segments for the position tracking of the communication terminal are referred to as tracking areas.

3GPP has formulated standards for Long Term Evolution-Advanced (LTE-A) as Release 10 (see Non Patent Literature 3 and Non Patent Literature 4). LTE-A is based on the wireless section communication scheme of LTE, and additionally includes several new technologies.

LTE-A systems employ Carrier Aggregation (CA), in which two or more Component Carriers (CCs) are aggregated in order to support wider transmission bandwidths up to 100 MHz. CA is described in Non Patent Literature 1.

When CA is configured, a communication terminal, or a UE, has only one RRC connection with a network (NW). In the RRC connection, one serving cell provides NAS mobility information and security input. This cell is referred to as a Primary Cell (PCell). In the downlink, the carrier corresponding to the PCell is a Downlink Primary Component Carrier (DL PCC). In the uplink, the carrier corresponding to the PCell is an Uplink Primary Component Carrier (UL PCC).

Depending on UE capabilities, a Secondary Cell (SCell) can be configured to form a set of serving cells together with the PCell. In the downlink, the carrier corresponding to the SCell is a Downlink Secondary Component Carrier (DL SCC). In the uplink, the carrier corresponding to the SCell is an Uplink Secondary Component Carrier (UL SCC).

A set of serving cells consisting of one PCell and one or more SCells is configured for one UE.

Other new technologies of LTE-A include technology for supporting wider bands (Wider bandwidth extension), Coordinated Multiple Point transmission and reception (CoMP) technology, and the like. CoMP has been developed for LTE-A in 3GPP, and is described in Non Patent Literature 1.

In addition, 3GPP has developed the use of small eNBs (hereinafter may be referred to as "small base station devices") constituting small cells in order to cope with enormous future traffic. For example, technology for enhancing the efficiency of frequency utilization and increasing the communication capacity by installing a large number of small eNBs and configuring a large number of small cells has been developed. A specific example of this technology is Dual Connectivity (abbreviated as DC), in which a UE is connected to and communicates with two eNBs. DC is described in Non Patent Literature 1.

One of the eNBs involved in dual connectivity (DC) may be referred to as a "master eNB (abbreviated as MeNB)", and the other may be referred to as a "secondary eNB (abbreviated as SeNB)".

There is an increasing trend in the traffic volume of mobile networks, and communication speed is also increasing. Further increase in communication speed is expected after the start of full-scale operation of LTE and LTE-A.

Furthermore, fifth-generation (hereinafter may be referred to as "5G") wireless access systems have been developed for advanced mobile communication and targeted for service launch in 2020 or later. For example, in Europe, requirements for 5G have been compiled by an association called METIS (see Non Patent Literature 5).

The requirements for 5G wireless access systems include 1000 times larger system capacity, 100 times higher data transmission rate, 1/10 lower data processing latency, and 100 times more communication terminals simultaneously connected than LTE systems, so as to achieve further reduction in power consumption and reduction in device cost.

In order to satisfy these requirements, 3GPP has devised 5G standards as Release 15 (see Non Patent Literatures 6 to 19). Technology for 5G wireless sections is referred to as "New Radio Access Technology" ("New Radio" is abbreviated as "NR").

NR systems are being developed based on LTE systems and LTE-A systems, but with the following modifications and additions.

As NR access schemes, OFDM is used for downlink, and OFDM and DFT-spread-OFDM (DFT-s-OFDM) are used for uplink.

NR allows for the use of higher frequencies than LTE to improve transmission speed and reduce processing delay.

NR ensures cell coverage by forming a narrow beam-shaped transmission/reception range (beamforming) and changing the beam direction (beamsweeping).

NR frame configurations support various subcarrier spacings, that is, various numerologies. Regardless of NR numerology, one subframe is one millisecond long, and one slot is composed of 14 symbols. In addition, the number of slots included in one subframe is one in the numerology with a subcarrier spacing of 15 kHz, and increases in proportion to subcarrier spacing in other numerologies (see Non Patent Literature 13 (3GPP TS38.211)).

NR downlink synchronization signals are transmitted as a synchronization signal burst (hereinafter may be referred to as an SS burst) from the base station at predetermined intervals for a predetermined duration. The SS burst includes a synchronization signal block (hereinafter may be referred to as an SS block) for each beam of the base station.

The base station transmits the SS block of each beam in different beams within the duration of the SS burst. The SS block includes P-SS, S-SS, and PBCH.

NR additionally uses phase tracking reference signals (PTRS) as NR downlink reference signals, so as to reduce the influence of phase noise. As with downlink, uplink reference signals also include PTRS.

NR adds slot format indication (SFI) to the information included in the PDCCH in order to flexibly switch between DL and UL in a slot.

In addition, NR reduces the power consumption of a UE by allowing a base station to set a part of the carrier frequency band (hereinafter may be referred to as a bandwidth part (BWP)) in advance for the UE so that the UE can perform transmission and reception with the base station using the BWP.

3GPP has developed various forms of DC: DC by an LTE base station and an NR base station connected to an EPC, DC by NR base stations connected to a 5G core system, and DC by an LTE base station and an NR base station connected to a 5G core system (see Non Patent Literatures 12, 16, and 19).

In addition, 3GPP has developed a framework for supporting services (or applications) using sidelink (SL) communication (also referred to as PC5 communication) in both the Evolved Packet System (EPS) to be described later and the 5G core system (see Non Patent Literatures 1, 16, 20, 21, 22, and 23). Examples of services using SL communication include vehicle-to-everything (V2X) services and proximity-based services.

3GPP has also developed several new technologies. An example thereof is NR-based multicast. In NR-based multicast, for example, dynamic switching between reliable multicast schemes: point-to-multipoint (PTM) transmission and point-to-point (PTP) transmission, has been developed (see Non Patent Literatures 24, 25, and 26).

### Citation List

### Non Patent Literature

Non Patent Literature 1: 3GPP TS 36.300 V16.2.0
Non Patent Literature 2: 3GPP S1-083461
Non Patent Literature 3: 3GPP TR 36.814 V9.2.0
Non Patent Literature 4: 3GPP TR 36.912 V16.0.0
Non Patent Literature 5: "Scenarios, requirements and KPIs for 5G mobile and wireless system", ICT-317669-METIS/D1.1
Non Patent Literature 6: 3GPP TR 23.799 V14.0.0
Non Patent Literature 7: 3GPP TR 38.801 V14.0.0
Non Patent Literature 8: 3GPP TR 38.802 V14.2.0
Non Patent Literature 9: 3GPP TR 38.804 V14.0.0
Non Patent Literature 10: 3GPP TR 38.912 V16.0.0
Non Patent Literature 11: 3GPP RP-172115
Non Patent Literature 12: 3GPP TS 37.340 V16.2.0
Non Patent Literature 13: 3GPP TS 38.211 V16.2.0
Non Patent Literature 14: 3GPP TS 38.213 V16.2.0
Non Patent Literature 15: 3GPP TS 38.214 V16.2.0
Non Patent Literature 16: 3GPP TS 38.300 V16.2.0
Non Patent Literature 17: 3GPP TS 38.321 V16.1.0
Non Patent Literature 18: 3GPP TS 38.212 V16.2.0
Non Patent Literature 19: 3GPP TS 38.331 V16.3.1
Non Patent Literature 20: 3GPP TR 23.703 V12.0.0
Non Patent Literature 21: 3GPP TS 23.501 V16.5.0
Non Patent Literature 22: 3GPP TS 23.287 V16.3.0
Non Patent Literature 23: 3GPP TS 23.303 V16.0.0
Non Patent Literature 24: 3GPP TR 23.757 V1.2.0
Non Patent Literature 25: 3GPP RP-201038
Non Patent Literature 26: 3GPP R2-2009337
Non Patent Literature 27: 3GPP TS 38.323 V16.2.0
Non Patent Literature 28: 3GPP TS 38.322 V16.2.0
Non Patent Literature 29: 3GPP TS 23.502 V16.7.1
Non Patent Literature 30: 3GPP TS 38.423 V16.4.0
Non Patent Literature 31: 3GPP TS 38.425 V16.2.0
Non Patent Literature 32: 3GPP TS 38.305 V16.3.0
Non Patent Literature 33: 3GPP TS 23.273 V16.5.0

### Summary of Invention

### Problem to be solved by the Invention

For switching between the PTM leg and the PTP leg, a Packet Data Convergence Protocol (PDCP) status report may be used. However, the transmission of a PDCP status report from a UE to a base station requires an instruction from the base station. For example, the UE transmits the PDCP status report to the base station in response to an instruction such as Data Radio Bearer (DRB) modification from the base station (see Non Patent Literatures 19 and 27). Therefore, for example, in a case where the UE has failed to receive some PDCP Protocol Data Units (PDUs) including multicast data, the UE cannot send the PDCP status report to the base station, which results in the problem that the loss status of multicast data in the UE is not resolved.

In view of the above problem, an object of the present disclosure is to implement a communication system capable of quickly securing reliability in multicast.

### Means to Solve the Problem

A communication system according to the present disclosure comprises: a base station conforming to New Radio Access Technology; and a communication terminal capable of performing multicast communication with the base station, wherein while executing the multicast communication, the communication terminal transmits reception status information to the base station in communication with the communication terminal, the reception status information being information related to a data reception status, and the base station performs control of retransmission of data to the communication terminal on a basis of the reception status information.

### Effects of the Invention

According to the present disclosure, it is possible to implement the communication system capable of quickly securing the reliability in multicast.

Objects, features, aspects, and advantages of the present disclosure will become more apparent from the following detailed description and the accompanying drawings.

### Brief Description of Drawings

FIG. 1 is an explanatory diagram illustrating a configuration of a radio frame for use in an LTE-based communication system.
FIG. 2 is a block diagram illustrating an overall configuration of an LTE-based communication system 200 discussed in 3GPP.
FIG. 3 is a block diagram illustrating an overall configuration of an NR-based communication system 210 discussed in 3GPP.
FIG. 4 is a diagram illustrating a DC configuration with an eNB and a gNB connected to an EPC.
FIG. 5 is a diagram illustrating a DC configuration with gNBs connected to an NG core.
FIG. 6 is a diagram illustrating a DC configuration with an eNB and a gNB connected to an NG core.
FIG. 7 is a diagram illustrating a DC configuration with an eNB and a gNB connected to an NG core.
FIG. 8 is a block diagram illustrating a configuration of a mobile terminal 202 illustrated in FIG. 2.
FIG. 9 is a block diagram illustrating a configuration of a base station 203 illustrated in FIG. 2.
FIG. 10 is a block diagram illustrating a configuration of an MME.
FIG. 11 is a block diagram illustrating a configuration of a 5GC unit.
FIG. 12 is a flowchart schematically illustrating the procedure from a cell search to an idle operation performed by a communication terminal (UE) in an LTE-based communication system.
FIG. 13 is a diagram illustrating an exemplary configuration of a cell in an NR system.
FIG. 14 is a sequence diagram illustrating the operation of switching from the PTM leg to the PTP leg and switching from the PTP leg to the PTM leg in multicast transmission according to a first embodiment.
FIG. 15 is a sequence diagram illustrating another example of the operation of switching from the PTM leg to the PTP leg and switching from the PTP leg to the PTM leg in multicast transmission according to the first embodiment.
FIG. 16 is a sequence diagram illustrating a multicast operation in which the PTM leg and the PTP leg are simultaneously used according to the first embodiment.
FIG. 17 is a diagram illustrating a configuration of PDCP entities and RLC entities for use in multicast that uses the PTM leg and/or the PTP leg according to a first modification of the first embodiment.
FIG. 18 is a diagram illustrating another exemplary configuration of PDCP entities and RLC entities for use in multicast that uses the PTM leg and/or the PTP leg according to the first modification of the first embodiment.
FIG. 19 is a diagram illustrating another exemplary configuration of PDCP entities and RLC entities for use in multicast that uses the PTM leg and/or the PTP leg according to the first modification of the first embodiment.
FIG. 20 is a diagram illustrating an architecture for multicast in DC according to a second embodiment.
FIG. 21 is a diagram illustrating another example of architecture for multicast in DC according to the second embodiment.
FIG. 22 is a diagram illustrating another example of architecture for multicast in DC according to the second embodiment.
FIG. 23 is a diagram illustrating another example of architecture for multicast in DC according to the second embodiment.
FIG. 24 is a sequence diagram illustrating the operation of setting a bearer configuration for multicast in DC according to the second embodiment.
FIG. 25 is a diagram illustrating an architecture for multicast in a base station having a CU/DU separation configuration according to a third embodiment.
FIG. 26 is a diagram illustrating another example of architecture for multicast in a base station having a CU/DU separation configuration according to the third embodiment.
FIG. 27 is a diagram illustrating another example of architecture for multicast in a base station having a CU/DU separation configuration according to the third embodiment.
FIG. 28 is a connection diagram for multicast from base stations constituting IAB according to a fourth embodiment.
FIG. 29 is a protocol stack diagram for multicast from base stations constituting IAB according to the fourth embodiment.
FIG. 30 is a diagram illustrating another example of connection for multicast from base stations constituting IAB according to the fourth embodiment.

### Description of Embodiments

Hereinafter, a communication system and a communication terminal according to embodiments of the present disclosure will be described in detail with reference to the drawings.

### First Embodiment.

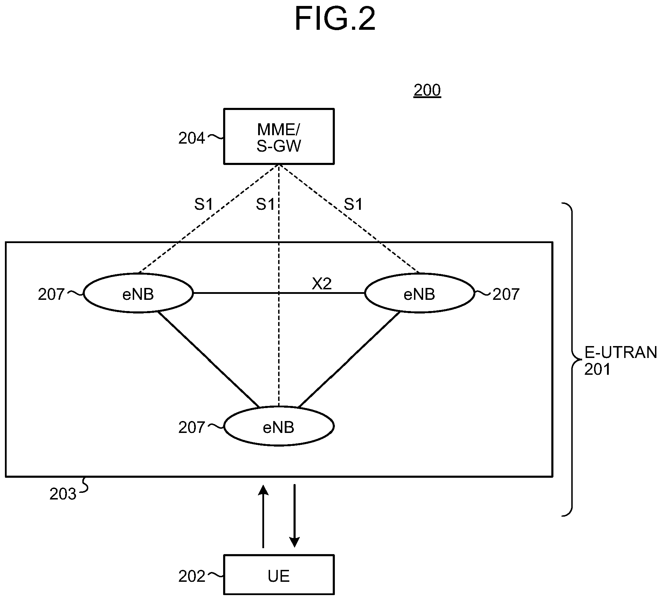

FIG. 2 is a block diagram illustrating an overall configuration of an LTE-based communication system 200 discussed in 3GPP. Below is a description of FIG. 2. The wireless access network is referred to as an Evolved Universal Terrestrial Radio Access Network (E-UTRAN) 201. A mobile terminal device (hereinafter referred to as a "mobile terminal or user equipment (UE)") 202 which is a communication terminal device can wirelessly communicate with a base station device (hereinafter referred to as a "base station or E-UTR_AN NodeB (eNB)") 203, and transmits and receives signals by wireless communication.

Here, "communication terminal devices" include not only mobile terminal devices such as mobile phone terminal devices that can move but also non-moving devices such as sensors. In the following description, a "communication terminal device" may be simply referred to as a "communication terminal".

If the control protocol for the mobile terminal 202, e.g. Radio Resource Control (RRC), and the user plane (hereinafter may be referred to as U-Plane), e.g. Packet Data Convergence Protocol (PDCP), Radio Link Control (RLC), Medium Access Control (MAC), or Physical layer (PHY), terminate at the base station 203, the E-UTRAN is configured by one or more base stations 203.

The control protocol "Radio Resource Control (RRC)" between the mobile terminal 202 and the base station 203 performs broadcast, paging, RRC connection management, and the like. The states of the base station 203 and the mobile terminal 202 in RRC are classified as RRC_IDLE and RRC_CONNECTED.

In RRC_IDLE, public land mobile network (PLMN) selection, system information (SI) broadcast, paging, cell re-selection, mobility, and the like are performed. In RRC_CONNECTED, the mobile terminal has an RRC connection and can transmit and receive data to and from the network. In RRC_CONNECTED, handover (HO), measurement of a neighbor cell, and the like are performed.

The base station 203 includes one or more eNBs 207. The system including the Evolved Packet Core (EPC) as a core network and the E-UTRAN 201 as a wireless access network is referred to as the Evolved Packet System (EPS). The EPC as a core network and the E-UTRAN 201 as a wireless access network may be collectively referred to as the "network".

The eNB 207 is connected via an S1 interface to an MME/S-GW unit (hereinafter may be referred to as the "MME unit") 204 including a Mobility Management Entity (MME), a Serving Gateway (S-GW), or the MME and the S-GW, and control information is communicated between the eNB 207 and the MME unit 204. A plurality of MME units 204 may be connected to one eNB 207. Different eNBs 207 are connected by an X2 interface, and control information is communicated between the eNBs 207.

The MME unit 204 is a higher-level device, specifically, a higher-level node, and controls the connection between the eNB 207 as a base station and the mobile terminal (UE) 202. The MME unit 204 constitutes the core network, namely the EPC. The base station 203 constitutes the E-UTRAN 201.

The base station 203 may configure one cell or may configure a plurality of cells. Each cell has a predetermined range forming the coverage in which communication with the mobile terminal 202 is possible, and wirelessly communicates with the mobile terminal 202 within the coverage. In a case where one base station 203 configures a plurality of cells, every single cell is configured to be able to communicate with the mobile terminal 202.

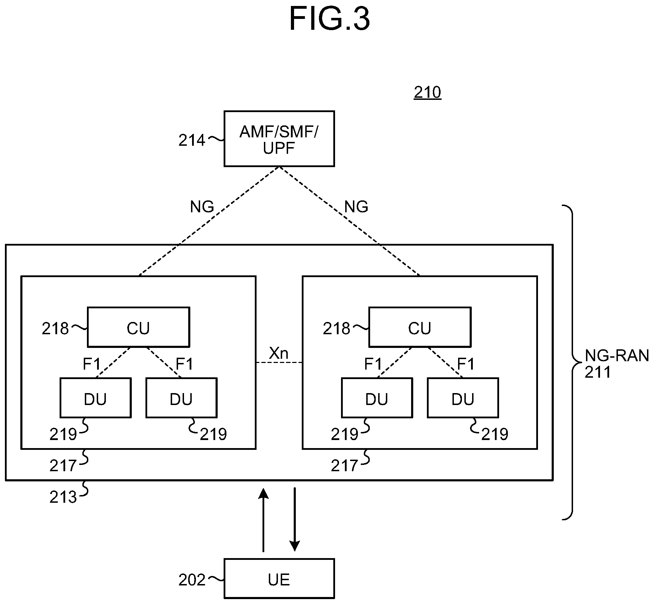

FIG. 3 is a block diagram illustrating an overall configuration of a 5G-based communication system 210 discussed in 3GPP. Below is a description of FIG. 3. The wireless access network is referred to as a Next Generation Radio Access Network (NG-R_AN) 211. The UE 202 can wirelessly communicate with an NR base station device (hereinafter referred to as an "NR base station or NG-RAN NodeB (gNB)") 213, and transmits and receives signals by wireless communication. The core network is referred to as the 5G core (5GC).

If the control protocol for the UE 202, e.g. Radio Resource Control (RRC), and the user plane (hereinafter may be referred to as U-Plane), e.g. Service Data Adaptation Protocol (SDAP), Packet Data Convergence Protocol (PDCP), Radio Link Control (RLC), Medium Access Control (MAC), or Physical layer (PHY), terminate at the NR base station 213, the NG-R_AN is configured by one or more NR base stations 213.

The function of the control protocol "Radio Resource Control (RRC)" between the UE 202 and the NR base station 213 is similar to that in the LTE. The states of the NR base station 213 and the UE 202 in RRC are classified as RRC_IDLE, RRC_CONNECTED, and RRC_INACTIVE.

RRC_IDLE and RRC_CONNECTED are similar to those in the LTE system. In RRC_INACTIVE, the connection between the 5G core and the NR base station 213 is maintained, and meanwhile system information (SI) broadcast, paging, cell re-selection, mobility, and the like are performed.

A gNB 217 is connected via an NG interface to an AMF/SMF/UPF unit (hereinafter may be referred to as the "5GC unit") 214 including an Access and Mobility Management Function (AMF), a Session Management Function (SMF), a User Plane Function (UPF), or the AMF, SMF, and UPF. Control information and/or user data is communicated between the gNB 217 and the 5GC unit 214. The NG interface is a generic term for the N2 interface between the gNB 217 and the AMF, the N3 interface between the gNB 217 and the UPF, the N11 interface between the AMF and the SMF, and the N4 interface between the UPF and the SMF. A plurality of 5GC units 214 may be connected to one gNB 217. Different gNBs 217 are connected by an Xn interface, and control information and/or user data is communicated between the gNBs 217.

The 5GC unit 214 is a higher-level device, specifically, a higher-level node, and distributes paging signals to one or more base stations 203 and/or base stations 213. The 5GC unit 214 also performs mobility control in the idle state. The 5GC unit 214 manages a tracking area list when the mobile terminal 202 is in the idle state, inactive state, and active state. The 5GC unit 214 starts the paging protocol by transmitting a paging message to a cell belonging to a tracking area in which the mobile terminal 202 is registered.

The NR base station 213 may also configure one or more cells similarly to the base station 203. In a case where one NR base station 213 configures a plurality of cells, every single cell is configured to be able to communicate with the UE 202.

The gNB 217 may be divided into a central unit (hereinafter may be referred to as CU) 218 and a distributed unit (hereinafter may be referred to as DU) 219. One CU 218 is configured in the gNB 217. One or more DUs 219 are configured in the gNB 217. The CU 218 is connected to the DU 219 by an F1 interface, and control information and/or user data is communicated between the CU 218 and the DU 219.

In the 5G-based communication system, the Unified Data Management (UDM) function and the Policy Control Function (PCF) described in Non Patent Literature 21 (3GPP TS23.501) may be included. The UDM and/or the PCF may be included in the 5GC unit 214 in FIG. 3.

In the 5G-based communication system, the Location Management Function (LMF) described in Non Patent Literature 32 (3GPP TS38.305) may be provided. The LMF may be connected to the base station via the AMF as disclosed in Non Patent Literature 33 (3GPP TS23.273).

In the 5G-based communication system, the Non-3GPP Interworking Function (N3IWF) described in Non Patent Literature 21 (3GPP TS23.501) may be included. The N3IWF may terminate the Access Network (AN) with the UE in non-3GPP access with the UE.

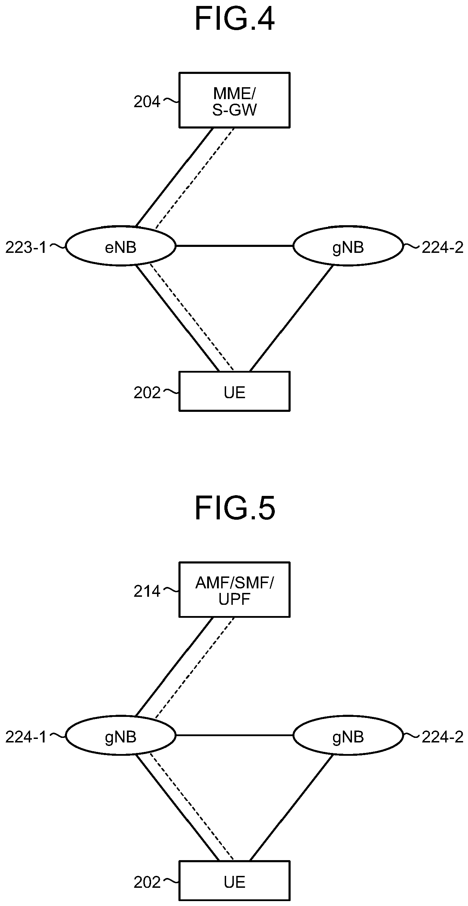

FIG. 4 is a diagram illustrating a DC configuration with an eNB and a gNB connected to an EPC. In FIG. 4, a solid line indicates a U-Plane connection, and a broken line indicates a C-Plane connection. In FIG. 4, the eNB 223-1 serves as a master base station, and the gNB 224-2 serves as a secondary base station (this DC configuration may be referred to as EN-DC). Although FIG. 4 illustrates an example in which the U-Plane connection between the MME unit 204 and the gNB 224-2 is established via the eNB 223-1, the U-Plane connection may be directly established between the MME unit 204 and the gNB 224-2.

FIG. 5 is a diagram illustrating a DC configuration with gNBs connected to an NG core. In FIG. 5, a solid line indicates a U-Plane connection, and a broken line indicates a C-Plane connection. In FIG. 5, the gNB 224-1 serves as a master base station, and the gNB 224-2 serves as a secondary base station (this DC configuration may be referred to as NR-DC). Although FIG. 5 illustrates an example in which the U-Plane connection between the 5GC unit 214 and the gNB 224-2 is established via the gNB 224-1, the U-Plane connection may be directly established between the 5GC unit 214 and the gNB 224-2.

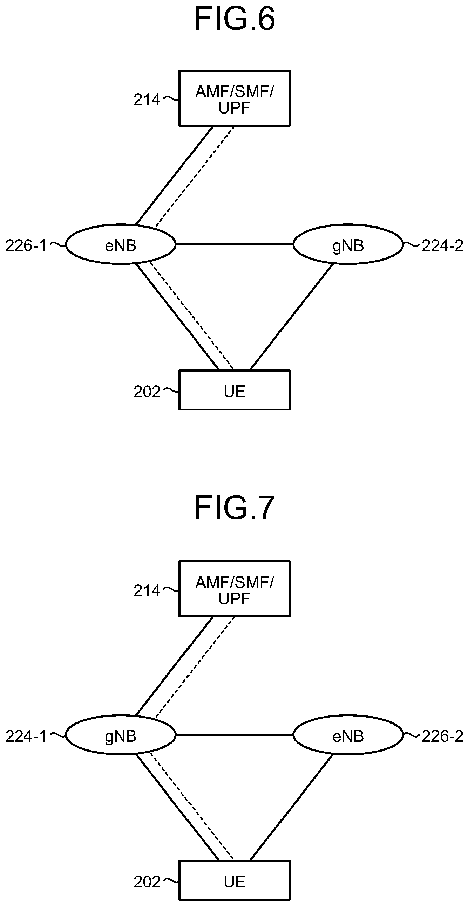

FIG. 6 is a diagram illustrating a DC configuration with an eNB and a gNB connected to an NG core. In FIG. 6, a solid line indicates a U-Plane connection, and a broken line indicates a C-Plane connection. In FIG. 6, the eNB 226-1 serves as a master base station, and the gNB 224-2 serves as a secondary base station (this DC configuration may be referred to as NG-EN-DC). Although FIG. 6 illustrates an example in which the U-Plane connection between the 5GC unit 214 and the gNB 224-2 is established via the eNB 226-1, the U-Plane connection may be directly established between the 5GC unit 214 and the gNB 224-2.

FIG. 7 is a diagram illustrating another DC configuration with an eNB and a gNB connected to an NG core. In FIG. 7, a solid line indicates a U-Plane connection, and a broken line indicates a C-Plane connection. In FIG. 7, the gNB 224-1 serves as a master base station, and the eNB 226-2 serves as a secondary base station (this DC configuration may be referred to as NE-DC). Although FIG. 7 illustrates an example in which the U-Plane connection between the 5GC unit 214 and the eNB 226-2 is established via the gNB 224-1, the U-Plane connection may be directly established between the 5GC unit 214 and the eNB 226-2.

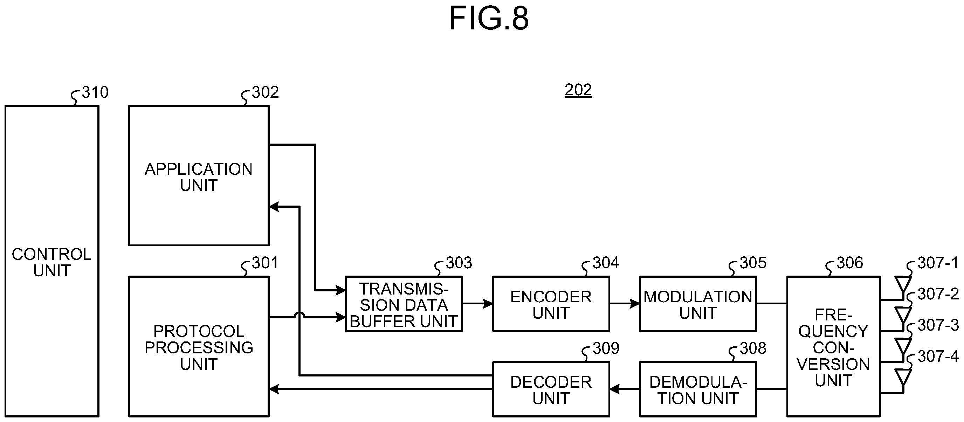

FIG. 8 is a block diagram illustrating a configuration of the mobile terminal 202 illustrated in FIG. 2. A transmission process in the mobile terminal 202 illustrated in FIG. 8 will be described. First, control data from a protocol processing unit 301 and user data from an application unit 302 are saved in a transmission data buffer unit 303. The data saved in the transmission data buffer unit 303 is passed to an encoder unit 304 and subjected to encoding such as error correction. Some data may be directly output from the transmission data buffer unit 303 to a modulation unit 305 without being subjected to encoding. The data encoded by the encoder unit 304 is subjected to modulation in the modulation unit 305. The modulation unit 305 may perform precoding for MIMO. The modulated data is converted into a baseband signal and then output to a frequency conversion unit 306 to be converted into a wireless transmission frequency. Thereafter, the transmission signals are transmitted from antennas 307-1 to 307-4 to the base station 203. FIG. 8 illustrates the case where the number of antennas is four, but the number of antennas is not limited to four.

A reception process in the mobile terminal 202 is executed as follows. Wireless signals from the base station 203 are received by the antennas 307-1 to 307-4. The reception signal is converted from the wireless reception frequency into a baseband signal in the frequency conversion unit 306, and demodulation is performed in a demodulation unit 308. The demodulation unit 308 may perform weight calculation and multiplication. The demodulated data is passed to a decoder unit 309, and decoding such as error correction is performed. Among the decoded data, the control data is passed to the protocol processing unit 301, and the user data is passed to the application unit 302. A series of processes of the mobile terminal 202 is controlled by a control unit 310. Therefore, the control unit 310 is connected to the respective units 301 to 309, which is not illustrated in FIG. 8. The control unit 310 is implemented by, for example, processing circuitry including a processor and a memory. That is, the control unit 310 is implemented by the processor executing a program in which a series of processes of the mobile terminal 202 is described. The program in which a series of processes of the mobile terminal 202 is described is stored in the memory. The memory is exemplified by a nonvolatile or volatile semiconductor memory such as a random access memory (RAM), a read only memory (ROM), or a flash memory. The control unit 310 may be implemented by dedicated processing circuitry such as a field programmable gate array (FPGA), an application specific integrated circuit (ASIC), or a digital signal processor (DSP). In FIG. 8, the number of antennas used for transmission and the number of antennas used for reception by the mobile terminal 202 may be the same or different.

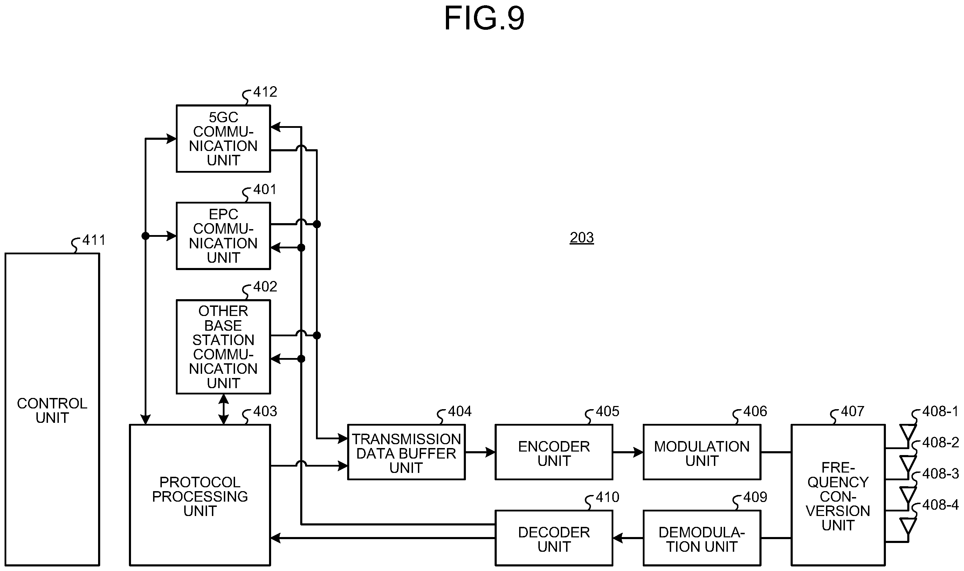

FIG. 9 is a block diagram illustrating a configuration of the base station 203 illustrated in FIG. 2. A transmission process in the base station 203 illustrated in FIG. 9 will be described. An EPC communication unit 401 transmits and receives data between the base station 203 and the EPC (such as the MME unit 204). A 5GC communication unit 412 transmits and receives data between the base station 203 and the 5GC (such as the 5GC unit 214). An other base station communication unit 402 transmits and receives data to and from other base stations. The EPC communication unit 401, the 5GC communication unit 412, and the other base station communication unit 402 each exchange information with a protocol processing unit 403. Control data from the protocol processing unit 403 and user data and control data from the EPC communication unit 401, the 5GC communication unit 412, and the other base station communication unit 402 are saved in a transmission data buffer unit 404.

The data saved in the transmission data buffer unit 404 is passed to an encoder unit 405 and subjected to encoding such as error correction. Some data may be directly output from the transmission data buffer unit 404 to a modulation unit 406 without being subjected to encoding. The encoded data is subjected to modulation in the modulation unit 406. The modulation unit 406 may perform precoding for MIMO. The modulated data is converted into a baseband signal and then output to a frequency conversion unit 407 to be converted into a wireless transmission frequency. Thereafter, the transmission signals are transmitted from antennas 408-1 to 408-4 to one or more mobile terminals 202. FIG. 9 illustrates the case where the number of antennas is four, but the number of antennas is not limited to four.

A reception process in the base station 203 is executed as follows. Wireless signals from one or more mobile terminals 202 are received by the antennas 408. The reception signal is converted from the wireless reception frequency into a baseband signal in the frequency conversion unit 407, and demodulation is performed in a demodulation unit 409. The demodulated data is passed to a decoder unit 410, and decoding such as error correction is performed. Among the decoded data, the control data is passed to the protocol processing unit 403, the 5GC communication unit 412, the EPC communication unit 401, or the other base station communication unit 402, and the user data is passed to the 5GC communication unit 412, the EPC communication unit 401, or the other base station communication unit 402. A series of processes of the base station 203 is controlled by a control unit 411. Therefore, the control unit 411 is connected to the respective units 401 to 410 and 412, which is not illustrated in FIG. 9. Similarly to the control unit 310 of the mobile terminal 202 described above, the control unit 411 is implemented by processing circuitry including a processor and a memory, or by dedicated processing circuitry such as FPGA, ASIC, or DSP. In FIG. 9, the number of antennas used for transmission and the number of antennas used for reception by the base station 203 may be the same or different.

The block diagram of FIG. 9 illustrating the configuration of the base station 203 may also apply to the configuration of the base station 213. In addition, in FIGS. 8 and 9, the number of antennas of the mobile terminal 202 and the number of antennas of the base station 203 may be the same or different.

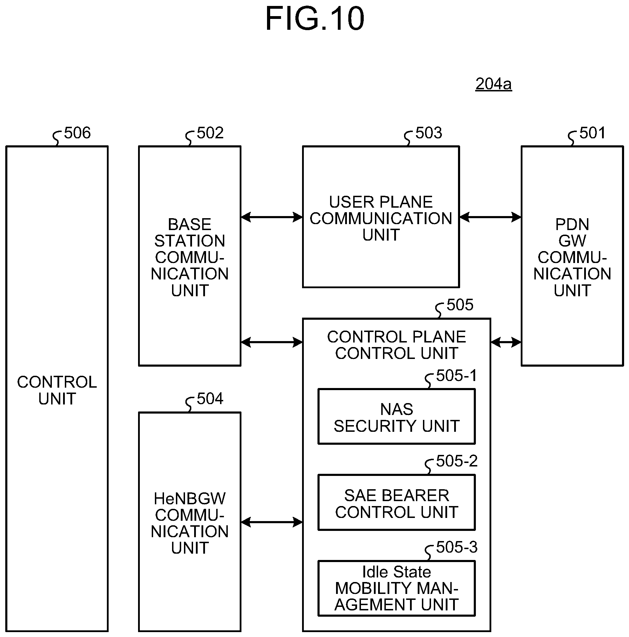

FIG. 10 is a block diagram illustrating a configuration of an MME. FIG. 10 depicts the configuration of the MME 204a included in the MME unit 204 illustrated in FIG. 2 described above. A PDN GW communication unit 501 transmits and receives data between the MME 204a and a Packet Data Network Gateway (PDN GW). A base station communication unit 502 transmits and receives data by means of the S1 interface between the MME 204a and the base station 203. If the data received from the PDN GW is user data, the user data is passed from the PDN GW communication unit 501 to the base station communication unit 502 via a user plane communication unit 503 and transmitted to one or more base stations 203. If the data received from the base station 203 is user data, the user data is passed from the base station communication unit 502 to the PDN GW communication unit 501 via the user plane communication unit 503 and transmitted to the PDN GW.

If the data received from the PDN GW is control data, the control data is passed from the PDN GW communication unit 501 to a control plane control unit 505. If the data received from the base station 203 is control data, the control data is passed from the base station communication unit 502 to the control plane control unit 505.

A HeNBGW communication unit 504 transmits and receives data between the MME 204a and a Home-eNB Gateway (HeNB GW). The control data received by the HeNBGW communication unit 504 from the HeNB GW is passed to the control plane control unit 505. The HeNBGW communication unit 504 transmits the control data input from the control plane control unit 505 to the HeNB GW.

The control plane control unit 505 includes a NAS security unit 505-1, an SAE bearer control unit 505-2, an Idle State mobility management unit 505-3, and the like, and performs general processing on the control plane (hereinafter may be referred to as C-Plane). The NAS security unit 505-1 ensures security of Non-Access Stratum (NAS) messages and the like. The SAE bearer control unit 505-2 manages bearers of System Architecture Evolution (SAE) and the like. The Idle State mobility management unit 505-3 performs, for example: mobility management in the idle state (also referred to as LTE-IDLE state or simply as idle); generation and control of paging signals in the idle state; and addition, deletion, update, and search of tracking areas and management of tracking area lists for one or more mobile terminals 202 under control.

The MME 204a distributes paging signals to one or more base stations 203. The MME 204a also performs mobility control in the idle state. The MME 204a manages a tracking area list when the mobile terminal 202 is in the idle state and the active state. The MME 204a starts the paging protocol by transmitting a paging message to a cell belonging to a tracking area in which the mobile terminal 202 is registered. The CSG management, CSG ID management, and whitelist management for the eNB 207 connected to the MME 204a may be performed by the Idle State mobility management unit 505-3.

A series of processes of the MME 204a is controlled by a control unit 506. Therefore, the control unit 506 is connected to the respective units 501 to 505, which is not illustrated in FIG. 10. Similarly to the control unit 310 of the mobile terminal 202 described above, the control unit 506 is implemented by processing circuitry including a processor and a memory, or by dedicated processing circuitry such as FPGA, ASIC, or DSP.

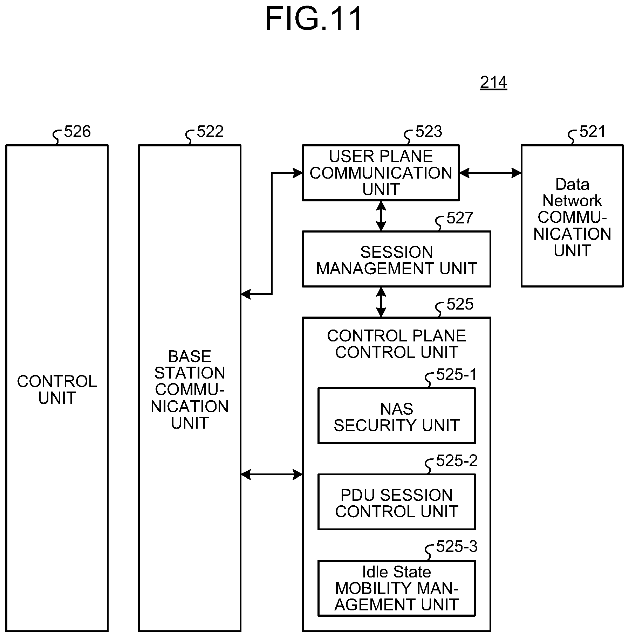

FIG. 11 is a block diagram illustrating a configuration of a 5GC unit. FIG. 11 depicts the configuration of the 5GC unit 214 illustrated in FIG. 3 described above. FIG. 11 depicts a case where an AMF configuration, an SMF configuration, and a UPF configuration are included in the 5GC unit 214 illustrated in FIG. 5. A Data Network communication unit 521 transmits and receives data between the 5GC unit 214 and the Data Network. A base station communication unit 522 transmits and receives data by means of the S1 interface between the 5GC unit 214 and the base station 203 and/or by means of the NG interface between the 5GC unit 214 and the base station 213. If the data received from the Data Network is user data, the user data is passed from Data Network communication unit 521 to the base station communication unit 522 via a user plane communication unit 523 and transmitted to one or more base stations 203 and/or base stations 213. If the data received from the base station 203 and/or the base station 213 is user data, the user data is passed from the base station communication unit 522 to the Data Network communication unit 521 via the user plane communication unit 523 and transmitted to the Data Network.

If the data received from the Data Network is control data, the control data is passed from the Data Network communication unit 521 to a session management unit 527 via the user plane communication unit 523. The session management unit 527 passes the control data to a control plane control unit 525. If the data received from the base station 203 and/or the base station 213 is control data, the control data is passed from the base station communication unit 522 to the control plane control unit 525. The control plane control unit 525 passes the control data to the session management unit 527.

The control plane control unit 525 includes a NAS security unit 525-1, a PDU session control unit 525-2, an Idle State mobility management unit 525-3, and the like, and performs general processing on the control plane (hereinafter may be referred to as C-Plane). The NAS security unit 525-1 ensures security of Non-Access Stratum (NAS) messages and the like. The PDU session control unit 525-2 manages a PDU session between the mobile terminal 202 and the 5GC unit 214. The Idle State mobility management unit 525-3 performs, for example: mobility management in the idle state (also referred to as RRC_IDLE state or simply as idle); generation and control of paging signals in the idle state; and addition, deletion, update, and search of tracking areas and management of tracking area lists for one or more mobile terminals 202 under control.

A series of processes of the 5GC unit 214 is controlled by a control unit 526. Therefore, the control unit 526 is connected to the respective units 521 to 523, 525, and 527, which is not illustrated in FIG. 11. Similarly to the control unit 310 of the mobile terminal 202 described above, the control unit 526 is implemented by processing circuitry including a processor and a memory, or by dedicated processing circuitry such as FPGA, ASIC, or DSP.

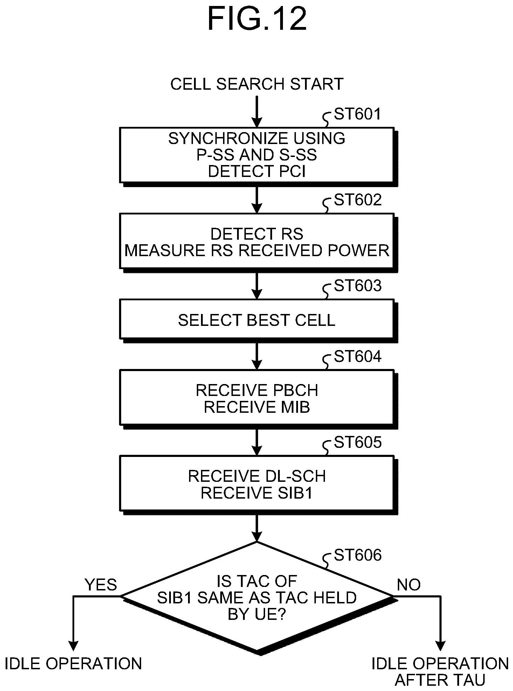

Next, an example of a cell search method in a communication system will be described. FIG. 12 is a flowchart schematically illustrating the procedure from a cell search to an idle operation performed by a communication terminal (UE) in an LTE-based communication system. Starting the cell search, the communication terminal synchronizes the slot timing and the frame timing using the primary synchronization signal (P-SS) and the secondary synchronization signal (S-SS) transmitted from a nearby base station in step ST601.

The P-SS and the S-SS are collectively referred to as synchronization signals (SS). The synchronization signals (SS) are allocated synchronization codes corresponding one-to-one to PCIs allocated to cells. The number of PCIs available is 504. The communication terminal performs synchronization using the 504 PCIs and detects (identifies) the PCI of a synchronized cell.

Next, in step ST602, the communication terminal detects, for the synchronized cell, a cell-specific reference signal (CRS), i.e. a reference signal (RS) transmitted from the base station for each cell, and measures the reference signal received power (RSRP) of the RS. For the reference signal (RS), codes corresponding one-to-one to PCIs are used. The cell can be separated from other cells based on the correlation with the code. By deriving the RS code of the cell from the PCI identified in step ST601, it is possible to detect the RS and measure the RS received power.

Next, in step ST603, the communication terminal selects, from among the one or more cells detected by step ST602, a cell having the best RS reception quality, e.g. a cell having the highest RS received power, or the best cell.

Next, in step ST604, the communication terminal receives the PBCH of the best cell and obtains the broadcast information BCCH. A Master Information Block (MIB) including cell configuration information is mapped to the BCCH on the PBCH. Therefore, the MIB is obtained by receiving the PBCH and obtaining the BCCH. Examples of MIB information include downlink (DL) system bandwidth (also called transmission bandwidth configuration or dl-bandwidth), the number of transmission antennas, and System Frame Number (SFN).

Next, in step ST605, the communication terminal receives the DL-SCH of the cell based on the cell configuration information of the MIB, and obtains System Information Block (SIB) 1 in the broadcast information BCCH. The SIB1 includes information related to access to the cell, information related to cell selection, and scheduling information of other SIBs (SIBk; k is an integer of ≥2). The SIB1 also includes a Tracking Area Code (TAC).

Next, in step ST606, the communication terminal compares the TAC of the SIB1 received in step ST605 with the TAC portion of the Tracking Area Identity (TAI) in the tracking area list already held by the communication terminal. The tracking area list is also referred to as the TAI list. The TAI is identification information for identifying the tracking area, and includes a Mobile Country Code (MCC), a Mobile Network Code (MNC), and a Tracking Area Code (TAC). The MCC is a country code. The MNC is a network code. The TAC is the code number of the tracking area.

If the result of the comparison in step ST606 shows that the TAC received in step ST605 is the same as the TAC included in the tracking area list, the communication terminal starts the idle operation in the cell. If the comparison shows that the TAC received in step ST605 is not included in the tracking area list, the communication terminal requests, through the cell, the core network (EPC) including the MME and the like to change the tracking area for performing Tracking Area Update (TAU).

The example illustrated in FIG. 12 represents the LTE-based operation from the cell search to the idle operation, but in the case of NR, step ST603 may involve selecting the best beam in addition to the best cell. In addition, in the case of NR, step ST604 may involve acquiring beam information such as the beam identifier. In addition, in the case of NR, step ST604 may involve acquiring the scheduling information of Remaining Minimum SI (RMSI). In the case of NR, step ST605 may involve receiving the RMSI.

A device constituting the core network (hereinafter may be referred to as a "core-network-side device") updates the tracking area list based on the identification number (such as UE-ID) of the communication terminal transmitted from the communication terminal together with the TAU request signal. The core-network-side device transmits the updated tracking area list to the communication terminal. The communication terminal rewrites (updates) the TAC list held by the communication terminal based on the received tracking area list. Thereafter, the communication terminal starts the idle operation in the cell.

With the spread of smartphones and tablet terminal devices, the traffic of cellular wireless communications is explosively increasing, and there is a worldwide concern about the shortage of radio resources. In order to increase the frequency utilization efficiency accordingly, cell size reduction for spatial separation has been in progress.

In conventional cell configurations, a cell configured by an eNB has a relatively wide range of coverage. The conventional cell configurations are designed such that a certain area is covered by a relatively wide range of coverage of a plurality of cells configured by a plurality of eNBs.

In the case of cell size reduction, a cell configured by an eNB has a narrower coverage than a cell configured by a conventional eNB. Therefore, for covering the same area as in the conventional case, a larger number of eNBs with reduced cell size are required than conventional eNBs.

In the following description, a cell having a relatively large coverage such as a cell configured by a conventional eNB is referred to as a "macro cell", and an eNB constituting a macro cell is referred to as a "macro eNB". A cell having a relatively small coverage such as a cell with reduced size is referred to as a "small cell", and an eNB constituting a small cell is referred to as a "small eNB".

A macro eNB may be exemplified by a "wide area base station" described in Non Patent Literature 7.

A small eNB may be exemplified by a low power node, a local area node, a hotspot, or the like. Alternatively, a small eNB may be a pico eNB constituting a picocell, a femto eNB constituting a femtocell, a HeNB, a remote radio head (RRH), a remote radio unit (RRU), remote radio equipment (RRE), or a relay node (RN). Still alternatively, a small eNB may be a "local area base station" or a "home base station" described in Non Patent Literature 7.

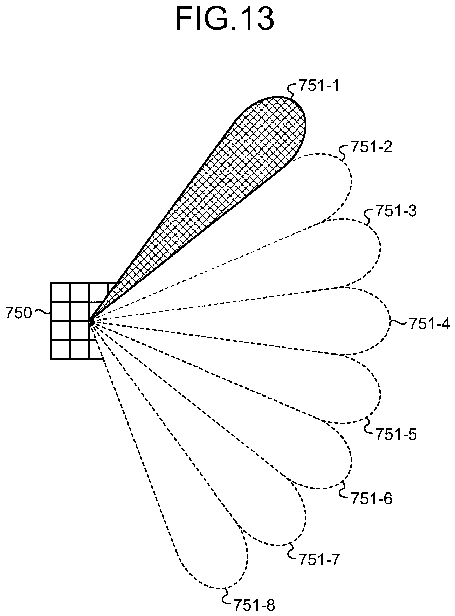

FIG. 13 illustrates an exemplary configuration of a cell in NR. In the NR cell, narrow beams are formed and transmitted in different directions. In the example illustrated in FIG. 13, a base station 750 performs transmission and reception with mobile terminals using a beam 751-1 in a certain time. In another time, the base station 750 performs transmission and reception with mobile terminals using a beam 751-2. Similarly, the base station 750 performs transmission and reception with mobile terminals using one or more of beams 751-3 to 751-8. In this way, the base station 750 configures a wide-range cell.

FIG. 13 illustrates an example in which the number of beams the base station 750 uses is eight, but the number of beams may be different from eight. In addition, the number of beams the base station 750 simultaneously uses is one in the example illustrated in FIG. 13, but may be two or more.

3GPP supports sidelink (SL) for device-to-device (D2D) communication and vehicle-to-vehicle (V2V) communication (see Non Patent Literature 1 and Non Patent Literature 16). SL is defined by the PC5 interface.

Physical channels for use in SL (see Non Patent Literature 1) will be described. Physical Sidelink Broadcast Channel (PSBCH) carries information related to the system and synchronization and is transmitted from UE.

Physical Sidelink Discovery Channel (PSDCH) carries a sidelink discovery message from UE.

Physical Sidelink Control Channel (PSCCH) carries control information from UE for sidelink communication and V2X sidelink communication.

Physical Sidelink Shared Channel (PSSCH) carries data from UE for sidelink communication and V2X sidelink communication.

Physical Sidelink Feedback Channel (PSFCH) carries HARQ feedback on the sidelink from the UE that has received the PSSCH transmission to the UE that has transmitted the PSSCH.

Transport channels for use in SL (see Non Patent Literature 1) will be described. Sidelink Broadcast Channel (SL-BCH) has a predetermined transport format and is mapped to the physical channel PSBCH.

Sidelink Discovery Channel (SL-DCH) has periodic broadcast transmissions in a fixed size and a predetermined format. The SL-DCH supports both UE autonomous resource selection and resource allocation scheduled by the eNB. There is a collision risk in the UE autonomous resource selection, and there is no collision when the UE is allocated individual resources by the eNB. The SL-DCH supports HARQ combining but does not support HARQ feedback. The SL-DCH is mapped to the physical channel PSDCH.

Sidelink Shared Channel (SL-SCH) supports broadcast transmission. The SL-SCH supports both UE autonomous resource selection and resource allocation scheduled by the eNB. There is a collision risk in the UE autonomous resource selection, and there is no collision when the UE is allocated individual resources by the eNB. The SL-SCH supports HARQ combining but does not support HARQ feedback. The SL-SCH also supports dynamic link adaptation by changing transmission power, modulation, and coding. The SL-SCH is mapped to the physical channel PSSCH.

Logical channels for use in SL (see Non Patent Literature 1) will be described. Sidelink Broadcast Control Channel (SBCCH) is a sidelink channel for broadcasting sidelink system information from one UE to other UEs. The SBCCH is mapped to the transport channel SL-BCH.

Sidelink Traffic Channel (STCH) is a one-to-many sidelink traffic channel for transmitting user information from one UE to other UEs. The STCH is used only by UEs having sidelink communication capability and UEs having V2X sidelink communication capability. One-to-one communication between two UEs having sidelink communication capability is also implemented by the STCH. The STCH is mapped to the transport channel SL-SCH.

Sidelink Control Channel (SCCH) is a control channel for sidelink for transmitting control information from one UE to other UEs. The SCCH is mapped to the transport channel SL-SCH.

3GPP has developed a framework for supporting V2X communication also in NR. V2X communication in NR is being developed based on LTE systems and LTE-A systems, but with the following modifications and additions.

In LTE, SL communication is applied only to broadcast. In NR, SL communication is designed to support unicast and groupcast in addition to broadcast (see Non Patent Literature 22 (3GPP TS23.287)).

Unicast communication and groupcast communication are designed to support HARQ feedback (Ack/Nack), CSI reporting, and the like.

SL communication is designed to support PC5-S signaling in order to support unicast and groupcast in addition to broadcast (see Non Patent Literature 22 (3GPP TS23.287)). For example, PC5-S signaling is performed to establish a link for performing SL, i.e. PC5 communication. This link is implemented in the V2X layer and is also referred to as the layer 2 link.

In addition, SL communication is designed to support RRC signaling (see Non Patent Literature 22 (3GPP TS23.287)). RRC signaling in SL communication is also referred to as PC5 RRC signaling. Examples of proposed techniques include notification of UE capabilities between UEs that perform PC5 communication, and notification of AS layer settings for performing V2X communication using PC5 communication.

In NR-based multicast communication, both point-to-multipoint (PTM) and point-to-point (PTP) may be used. PTM and PTP may use a common PDCP entity. PTM and PTP may have different legs (RLC, combinations of logical channels). In multicast communication, the PTM leg and the PTP leg may be used through dynamic switching therebetween.

For switching between the PTM leg and the PTP leg, a PDCP status report may be used. A base station may use the PDCP status report transmitted from a UE for determination of PTM/PTP switching for the UE. The base station may retransmit PDCP PDU including multicast data to the UE using the report.

However, the transmission of a PDCP status report from a UE to a base station requires an instruction from the base station. For example, the UE transmits the PDCP status report to the base station in response to an instruction such as DRB modification from the base station (see Non Patent Literatures 19 and 27). Therefore, for example, in a case where the UE has failed to receive some PDCP PDUs including multicast data, the UE cannot send the PDCP status report to the base station, which results in the problem that the loss status of multicast data in the UE is not resolved.

The present embodiment discloses a method for solving this problem.

In order to solve the above problem, in the communication system according to the present embodiment, the UE notifies the base station of information related to the multicast reception status. The UE may be able to autonomously transmit the notification to the base station. For the notification, a PDCP status report (see Non Patent Literature 27 (TS38.323)) may be used. As another example, PRACH or RRC signaling may be used for the notification.

The base station performs PTM/PTP switching using the information received from the UE. As another example, the base station may perform PTM/PTP switching without using the information.

The base station notifies the UE of information related to PTM/PTP switching. For the notification, RRC signaling, MAC signaling, or L1/L2 signaling may be used.

As another example, the base station may not give notification of the information. That is, the base station may implicitly perform PTM/PTP switching. The UE may be able to simultaneously receive PTM and PTP. As a result, for example, PTM/PTP switching can be quickly executed in the communication system.

An example in which a PDCP status report is used for notification of information related to the multicast reception status from the UE to the base station is disclosed.

The UE may autonomously transmit the PDCP status report. The UE may perform the autonomous transmission of the PDCP status report in multicast.

The UE may determine whether it is multicast. For the determination, the UE may use a logical channel identifier, a QoS flow identifier, or a bearer identifier. As an example of the determination using a bearer identifier, the identifier (MRB-ID) of a bearer for multicast may be used.

As conditions under which the UE transmits the PDCP status report, (1) to (5) below are disclosed.
(1) Transmit periodically.
(2) Transmit in response to a predetermined condition in the PDCP layer.
(3) Transmit in response to a predetermined condition in the RLC layer.
(4) Transmit in response to a predetermined condition in HARQ.
(5) Combinations of (1) to (4).

In (1), the UE periodically transmits the PDCP status report to the base station. The base station may grasp the reception status of multicast data in the UE using the periodic report. As a result, for example, the base station can continuously monitor the reception status in the UE, and consequently, stable multicast communication can be performed.

The cycle in (1) may be determined in advance in a standard, or may be determined by the base station and given as a notification to the UE. The base station may give the notification using RRC signaling, for example, RRCReconfiguration. The RRC signaling may be, for example, RRC signaling for use in multicast setting. As a result, for example, signaling from the base station can be reduced.

As another example in which the base station gives the notification, MAC signaling or L1/L2 signaling may be used. As a result, for example, quick notification can be given from the base station to the UE.

As another example related to the cycle, the AMF may determine the cycle. The AMF may notify the UE of the cycle. The AMF may give the notification of the cycle using, for example, NAS signaling. As a result, for example, the AMF can notify the UE of a lot of information.

In (2), the UE may transmit the PDCP status report in response to the expiration of a timer that is used in the PDCP layer. The timer may be, for example, a timer for use in reordering (t-reordering described in Non Patent Literature 27). Using the notification, the base station may perform PTM/PTP switching and/or retransmit PDCP PDU. As a result, for example, after a reception loss at the PDCP layer in the UE, quick retransmission from the base station can be performed.

As another example, a timer for PDCP status report transmission may be newly provided. The timer may be started, for example, in response to PDCP PDUs not arriving in order. The value of the timer may be shorter than t-reordering, for example. The UE may transmit the PDCP status report to the base station in response to the expiration of the timer for PDCP status report transmission. As a result, for example, before the t-reordering expires, the base station can transmit the lost PDCP PDU to the UE, and consequently, the UE can transfer the reordered multicast data to the upper layer.

As another example in (2), the number of lost PDCP PDUs may be used, or the number of lost PDCP Service Data Units (SDUs) may be used. For example, the UE may transmit the PDCP status report to the base station in response to the number of lost PDCP PDUs being equal to or greater than a predetermined value or greater than a predetermined value. As another example, the number of consecutive lost units may be used instead of the number of lost units. The PDCP PDU described above may be, for example, PDCP PDU relevant to multicast. Using the report, the base station may perform PTM/PTP switching and/or retransmit PDCP PDU. As a result, for example, the lost multicast data can be collectively retransmitted from the base station to the UE, and consequently, efficient multicast retransmission can be performed.

As another example in (2), the loss rate of PDCP PDU may be used. For example, the UE may calculate a PDCP PDU loss rate in the PDCP Sequence Number (SN) within a predetermined range, or may calculate a PDCP SDU loss rate in the COUNT value (see Non Patent Literature 27 (TS38.323)) within a predetermined range. The UE may transmit the PDCP status report to the base station when the loss rate is equal to or greater than a predetermined value or greater than a predetermined value. Using the report, the base station may perform PTM/PTP switching and/or retransmit PDCP PDU. As a result, for example, the base station can quickly retransmit the lost multicast data to the UE, and consequently, the reliability of multicast can be secured.

As an example in (3), the UE may transmit the PDCP status report when a condition for transmission of RLC status PDU (see Non Patent Literature 28 (TS38.322)) is satisfied. The RLC layer of the UE may notify the PDCP layer that the condition for transmission of RLC status PDU is satisfied, or may instruct the PDCP layer to notify the base station of the PDCP status report. The UE may transmit both the RLC status PDU and the PDCP status report. As another example, the UE may transmit the PDCP status report instead of transmitting the RLC status PDU. Using the report, the base station may perform PTM/PTP switching and/or retransmit PDCP PDU. As a result, for example, the UE can quickly transmit the PDCP status report to the base station, and consequently, quick retransmission from the base station to the UE can be performed.

As another example in (3), the UE may transmit the PDCP status report in response to the expiration of a timer that is used in the RLC layer. The timer may be, for example, a timer for use in reassembly in the RLC layer (t-reassembly described in Non Patent Literature 28). The RLC layer of the UE may notify the PDCP layer of the expiration of the timer, or may instruct the PDCP layer to notify the base station of the PDCP status report. Using the report, the base station may perform PTM/PTP switching and/or retransmit PDCP PDU. As a result, for example, after a reception loss at the PDCP layer in the UE, quick retransmission from the base station can be performed.

In (3), a new timer may be provided. The timer may be started, for example, in response to RLC PDUs not arriving in order. The value of the timer may be shorter than the t-reassembly described above, for example. The UE may transmit the PDCP status report to the base station in response to the expiration of the timer. As a result, for example, before the t-reassembly expires, the base station can transmit the lost PDCP PDU to the UE, and consequently, the UE can transfer the reassembled multicast data to the upper layer.

As another example in (3), the number of lost RLC PDUs may be used. For example, the UE may transmit the PDCP status report to the base station in response to the number of lost RLC PDUs being equal to or greater than a predetermined value or greater than a predetermined value. As another example, the number of consecutive lost units may be used instead of the number of lost units. The RLC PDU may be, for example, RLC PDU relevant to multicast. Using the report, the base station may perform PTM/PTP switching and/or retransmit PDCP PDU. As a result, for example, the lost multicast data can be collectively retransmitted from the base station to the UE, and consequently, efficient multicast retransmission can be performed.

As another example in (3), the loss rate of RLC PDU may be used. For example, the UE may calculate an RLC PDU loss rate in the RLC Sequence Number (SN) within a predetermined range. The UE may transmit the PDCP status report to the base station when the loss rate is equal to or greater than a predetermined value or greater than a predetermined value. Using the report, the base station may perform PTM/PTP switching and/or retransmit PDCP PDU. As a result, for example, the base station can quickly retransmit the lost multicast data to the UE, and consequently, the reliability of multicast can be secured.

The RLC entity for use in condition determination in (3) may be an RLC-Acknowledged Mode (AM) entity. As a result, for example, complexity in the communication system can be avoided. As another example, the RLC entity may be an RLC-Unacknowledged Mode (UM) entity. As a result, for example, the reliability of multicast can be secured with a small amount of processing.

The RLC entity for use in condition determination in (3) may be an RLC entity for use in PTM communication. As a result, for example, switching from PTM to PTP can be quickly executed. The RLC entity may be an RLC entity for use in PTP communication. As a result, for example, switching from PTP to PTM can be quickly executed. The RLC entity may be both an RLC entity for use in PTM communication and an RLC entity for use in PTP communication. As a result, for example, switching from PTM to PTP and from PTP to PTM can be quickly executed.

The RLC entity for use in condition determination in (3) may be an RLC entity on an active communication path. As a result, for example, PDCP status report transmission from the UE to the base station can be quickly executed. As another example, the RLC entity may be an inactive RLC entity. As a result, for example, the UE can request the base station to retransmit the data in the retransmission queue using the inactive RLC entity, and consequently, reliability can be secured.

The base station may configure leg settings for the UE. The settings may include information related to the type of leg (e.g. PTM leg or PTP leg) or information related to the default operation state (e.g. operation or stop). The settings may be configured using, for example, RRC signaling.

The base station may transmit to the UE a notification related to the operation (activation) and/or stop (deactivation) of a leg. The notification may include information for identifying the leg of the UE, information related to the operation and/or stop of the leg, or information that is a combination of the two. As another example, the notification may include information related to the leg to be operated. The UE may operate or stop a leg using the notification. For example, using information related to the leg to be operated, the UE may operate the leg or stop the other leg. As another example, using information related to the leg to be operated, the UE may initiate the operation of the leg while operating the other leg. As another example, using information related to the leg to be stopped, the UE may stop the leg. Using information related to the leg to be stopped, the UE may operate or stop the other leg. The base station may give the notification using RRC signaling, MAC signaling, or L1/L2 signaling. As a result, for example, quick switching between the legs can be performed.

As an example in (4), the UE may transmit the PDCP status report to the base station in response to the HARQ retransmission excess in the UE being equal to or greater than a predetermined count or greater than a predetermined count. The predetermined count may be one or more. The HARQ layer of the UE may notify the PDCP layer that the HARQ retransmission excess is equal to or greater than the predetermined count or greater than the predetermined count, or may instruct the PDCP layer to transmit the PDCP status report. Using the report, the base station may perform PTM/PTP switching and/or retransmit PDCP PDU. As a result, for example, the lost multicast data can be collectively retransmitted from the base station to the UE, and consequently, efficient multicast retransmission can be performed.

As another example in (4), the UE may transmit the PDCP status report to the base station in response to the HARQ retransmission excess in the UE within a predetermined period being equal to or greater than a predetermined count or greater than a predetermined count. A timer representing the predetermined period may be provided. As a result, for example, the base station can quickly retransmit the lost multicast data to the UE, and consequently, the reliability of multicast can be secured.

As another example in (4), the UE may transmit the PDCP status report to the base station in response to the HARQ retransmission excess over a predetermined number of transport block transmissions being equal to or greater than a predetermined count or greater than a predetermined count. As a result, for example, the same effect as above can be obtained.

The predetermined value, range, count, and/or period in any of the items (1) to (4) may be determined in advance in a standard, or may be determined by the base station and given as a notification to the UE. The base station may give the notification using RRC signaling, for example, RRCReconfiguration. The RRC signaling may be, for example, RRC signaling for use in multicast setting. As a result, for example, signaling from the base station can be reduced.

As another example in which the base station gives the notification, MAC signaling or L1/L2 signaling may be used. As a result, for example, quick notification can be given from the base station to the UE.

The UE may transmit the PDCP status report using the leg of PTM. As a result, for example, the UE can quickly notify the base station of the report.

The base station may individually allocate resources of the time and/or frequency and code sequence of uplink PUCCH to UE that uses the PTM leg. The resources allocated to UE may be for SR or for HARQ feedback. The UE may transmit SR to the base station using the resources. The base station may notify the UE of an uplink grant in response to the SR. The UE may transmit the PDCP status report to the base station using the uplink grant. The resources individually allocated from the base station to UE may vary between UEs. As a result, for example, it is possible to prevent a collision with another UE in the uplink PUCCH transmission. The base station may set the resources using, for example, RRC individual signaling.

As another example, the UE may perform the transmission using the leg of PTP. As a result, for example, complexity in the communication system can be avoided. In this case, uplink RLC layer transmission in the PTM leg of the UE may not be performed. As a result, for example, the circuit scale in the UE can be reduced.

As another example, the UE may transmit the PDCP status report using an active leg. As a result, for example, quick notification can be given from the UE to the base station.

As another example, the UE may transmit the PDCP status report using an inactive leg. The UE may temporarily activate the inactive leg. As a result, for example, the UE can execute multicast reception and PDCP status report transmission in parallel, and consequently, the efficiency of the communication system can be improved. The UE may deactivate the leg again after the transmission is completed. As a result, for example, the amount of power consumption of the UE can be reduced.

As another example, the UE may transmit the PDCP status report using a leg different from the leg used for the condition determination of (1) to (4). As a result, for example, deterioration of the communication environment occurring in the leg used for condition determination can be avoided, and consequently, the reliability of transmission of the PDCP status report can be improved.

In the PDCP status report, the UE may include information related to the number of PDCP PDUs missing in reception, information related to the number of PDCP PCUs consecutively missing in reception, information related to the timing of the occurrence of the consecutive reception missing, or information related to the reception missing rate of PDCP PDU. As a result, for example, the base station can quickly grasp the information.

In the PDCP status report, the UE may include a request for multicast PTM/PTP switching. The request may include information indicating whether to perform leg switching, information related to the leg to be operated, information related to the leg to be stopped, or a combination thereof. The base station may or may not perform multicast PTM/PTP switching using the information. As a result, for example, the base station can quickly execute PTM/PTP switching, and consequently, the reliability of multicast communication can be improved.

In the PDCP status report to be given as a notification, the UE may include information for identifying a multicast (e.g. identifier of the multicast, logical channel identifier relevant to the multicast, or identifier of a radio bearer for use in the multicast such as MRB-ID). As a result, for example, the base station can quickly identify the multicast.

A predetermined range may be provided for logical channel identifiers for multicast, for example, logical channel identifiers that are allocated to PTM legs. The range may be different from the range of logical channel identifiers that can be allocated for individual channels. As a result, for example, in the UE that receives multicast, it is possible to prevent overlap between the logical channel identifier allocated to the PTM leg and the logical channel identifier of another individual channel.

An example in which RACH is used for notification of information related to the multicast reception status from the UE to the base station is disclosed.

RACH for notification of the information may be provided. The PRACH preamble in the RACH may be different from the PRACH preamble for use in starting connection to the base station and the PRACH preamble for use in a system information request. For example, a predetermined range may be provided as a PRACH preamble for notification of information related to the multicast reception status from the UE to the base station. The base station may recognize the type of RACH using the PRACH preamble from the UE. As a result, for example, the base station can quickly determine the type of RACH.

The base station may individually allocate the PRACH preamble to the UE. The allocation from the base station to the UE may be made, for example, from among the foregoing predetermined range. The allocation from the base station to the UE may be made using, for example, RRC signaling. The UE may transmit the PRACH to the base station using the preamble. As a result, for example, it is possible to prevent PRACH collision between the UE and another UE, and consequently, the UE can quickly give the notification of the information.

The conditions under which the UE transmits the RACH for the notification may be similar to the conditions for transmitting the PDCP status report. As a result, for example, an effect similar to that in the case of transmitting the PDCP status report can be obtained.

Another example related to the conditions may be that a reception quality from the base station in the UE is equal to or less than a predetermined value or less than a predetermined value. For measuring the reception quality, the UE may use SS blocks, CSI-RS, PDCCH relevant to multicast, or multicast data. As the reception quality, the UE may use Signal to Interference plus Noise Ratio (SINR), Signal to Noise Ratio (SNR), Block Error Rate (BLER), Bit Error Rate (BER) (or BER conversion value), Reference Signal Received Power (RSRP), or Reference Signal Received Quality (RSRQ). The predetermined value may be determined in advance in a standard, or may be determined by the base station and given as a notification or broadcast to the UE. Using the information, the base station may perform multicast PTM/PTP switching or may retransmit multicast. As a result, for example, the UE can quickly notify the base station of the deterioration of the reception quality, and consequently, the reliability of multicast can be quickly secured.

In the RACH to the base station, the UE may include information related to a multicast retransmission request, information related to the multicast data requested to be retransmitted, or information for identifying a multicast. Information similar to that in the PDCP status report described above may be included. Using the information, the base station may recognize the multicast data that needs to be retransmitted. As a result, for example, the base station can quickly execute the multicast retransmission.

The UE may include the information in Msg3 in a random access process and transmit the Msg3 to the base station. The random access process may be, for example, a random access process that is performed in four steps. As a result, for example, the UE can transmit a lot of information to the base station.

The UE may include the information in MsgA in a random access process and transmit the MsgA to the base station. The random access process may be, for example, a random access process that is performed in two steps. As a result, for example, the UE can quickly notify the base station of the information.

In the RACH for the notification, the base station may include a PTP/PTM switching instruction for the UE in Msg4 or MsgB as a notification. As a result, for example, the amount of signaling between the base station and the UE can be reduced.

In the RACH for the notification, Msg4 or MsgB may not be transmitted from the base station to the UE. As a result, for example, the RACH procedure for the notification can be quickly completed.

An example in which RRC signaling is used for notification of information related to the multicast reception status from the UE to the base station is disclosed.

The UE may notify the base station of the information using RRC signaling. As a result, for example, the UE can notify the base station of a lot of information.

As the RRC signaling, existing signaling may be used such as signaling for use in measurement report described in Non Patent Literature 19 (TS38.331). As another example, a new type of signaling may be provided.

The conditions under which the UE transmits the RRC signaling may be similar to the foregoing conditions for transmitting the PDCP status report. As a result, for example, an effect similar to that in the case of transmitting the PDCP status report can be obtained.

As another example related to the conditions, the conditions may be similar to the foregoing conditions for transmitting the RACH. As a result, for example, an effect similar to that in the case of transmitting the RACH can be obtained.

Another example related to the conditions may be an event that triggers measurement (see Non Patent Literature 19 (TS38.331)). As the event, an existing event may be used. As a result, for example, design complexity in the communication system can be avoided.

A new event may be provided. For example, the new event may be occurrence of a condition for transmitting the PDCP status report described above, may be similar to a condition for transmitting the RACH described above, or may be occurrence of any of the conditions (1) to (5) described above. As an event that triggers measurement, the new event may be used. The base station may set, for the UE, a measurement event that starts in response to the event. The setting from the base station to the UE may be configured using, for example, signaling of measurement request or signaling of multicast setting. The UE may make a measurement report to the base station in response to the occurrence of the event. As a result, for example, flexible condition setting is enabled.

In the RRC signaling, the UE may include information related to a multicast retransmission request, information related to the multicast data requested to be retransmitted, or information for identifying a multicast. The information may include, for example, information related to a radio bearer for use in transmission of the multicast data, information related to a logical channel, information related to the QoS flow of the multicast data, information related to the PDCP PDU relevant to retransmission, information related to the RLC PDU relevant to retransmission, or information that is a combination of two or more of the above items. Using the information, the base station may recognize the multicast data that needs to be retransmitted. As a result, for example, the base station can quickly execute the multicast retransmission.

Different types of signaling disclosed above may be used in combination. The signaling to be used may be switched. For example, the signaling to be used may be switched using the type of RLC entity for use in multicast transmission and reception. For example, the PDCP status report may be used in the case of using RLC-AM, or the RACH may be used in the case of using RLC-UM. As a result, for example, flexibility in the communication system can be improved, and complexity in the design of the communication system can be avoided.

The base station determines PTM/PTP switching. The base station may make the determination using the information related to the multicast reception status received from the UE or without using the information. For example, the base station may autonomously determine the switching. For example, the base station may determine the switching using HARQ-NACK from the UE (for example, in response to receiving HARQ-NACK from the UE for a predetermined count or more), or may determine the switching using information of the PDCP SN transmitted to the UE that receives using the PTP leg and the PDCP SN transmitted by PTM to another UE (for example, in response to confirming that there is no difference between these PDCP SNs). As a result, for example, the base station can select the optimum leg according to the environment of communication with the UE, and consequently, efficiency in the communication system can be improved.

PTM/PTP switching is performed between the base station and the UE. The base station may make a request for PTM/PTP switching to the UE. The request from the base station to the UE may be made using RRC signaling, MAC signaling, or L1/L2 signaling. Using the signaling, the UE switches the leg for reception operation between PTM and PTP. As a result, for example, power consumption in the UE can be reduced.

The base station may transmit the request using the leg currently used for multicast transmission to the UE. As a result, for example, the base station can quickly notify the UE of the request. The request may include information related to the UE to perform leg switching (for example, Cell Radio Network Temporary Identifier (C-RNTI)). As a result, for example, even when the request is transmitted with the PTM leg, it is possible to easily identify the UE which should perform leg switching. The request may include information related to the multicast for which leg switching is performed (e.g. identifier of the multicast, information related to a bearer for use in multicast transmission, or information related to a logical channel for use in multicast transmission). As a result, for example, the UE can quickly identify the multicast relevant to leg switching. The request may include information related to the destination of leg switching, information related to the source of leg switching, or information for identifying the leg switching (e.g. information indicating switching from PTM to PTP or switching from PTP to PTM). As a result, for example, the UE can quickly identify the post-switching leg.

The same may apply to switching from the PTP leg to the PTM leg: for example, the UE may transmit the PDCP status report to the base station, RACH may be used, or RRC signaling such as measurement report may be transmitted. As another example, RLC status PDU, MAC signaling, or L1/L2 signaling may be transmitted from the UE to the base station.

The base station may determine switching from the PTP leg to the PTM leg. The base station may determine the switching, for example, using the foregoing notification from the UE, or the base station may autonomously determine the switching. An exemplary condition for the determination in the base station may be that the t-reordering in the UE has not expired for a predetermined period, or that there is no difference between the PDCP SN transmitted to the UE that receives using the PTP leg and the PDCP SN transmitted by PTM to another UE. As a result, for example, the base station can quickly determine the switching, and communication efficiency in multicast can be improved.

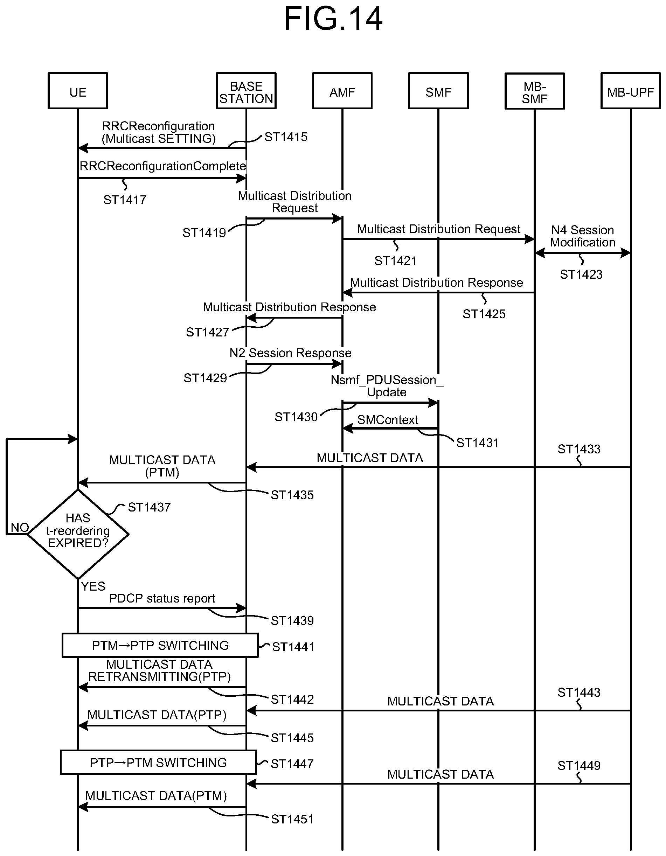

FIG. 14 is a sequence diagram illustrating the operation of switching from the PTM leg to the PTP leg and switching from the PTP leg to the PTM leg in multicast transmission from the base station to the UE. FIG. 14 illustrates an example in which the UE gives a notification of the status related to multicast reception using the PDCP status report. FIG. 14 illustrates an example in which the notification is given in response to the expiration of the t-reordering timer.

In step ST1415 illustrated in FIG. 14, the base station instructs the UE to configure the multicast setting. The base station may give the notification using, for example, RRC reconfiguration (see Non Patent Literature 19 (TS38.331)). The instruction from the base station to the UE may include target multicast information (e.g. identifier of the multicast or identifier of a radio bearer for use in multicast transmission), information related to the setting of the PTM leg and/or the PTP leg, information related to the notification from the UE to the base station such as the means of the notification (e.g. PDCP status report, RACH, or RRC signaling), information related to the conditions of the notification (e.g. information related to (1) to (5) above), or information related to the setting of uplink transmission from the UE. The information related to the setting of the PTM leg and/or the PTP leg may include information related to a logical channel (e.g. logical channel identifier), information related to the setting of the RLC layer, information related to the MAC layer, or information related to the PHY layer. The information related to the setting of uplink transmission from the UE may include, for example, information related to resources of the time and/or frequency and code sequence of uplink PUCCH. The UE may configure the settings relevant to multicast reception using the notification.

In step ST1417 illustrated in FIG. 14, the UE gives a notification of the completion of the multicast setting. The UE may give the notification using, for example, RRC reconfiguration complete (see Non Patent Literature 19 (TS38.331)).

In step ST1419 illustrated in FIG. 14, the base station makes a request for multicast distribution to the AMF. The request may include information for identifying the UE or information for identifying the multicast. In step ST1421, the AMF makes a request for multicast distribution to the multicast/broadcast SMF (MB-SMF) (see Non Patent Literature 24 (TR23.757)). In step ST1423, modification of session information relevant to multicast distribution is performed between the MB-SMF and the multicast/broadcast UPF (MB-UPF) (see Non Patent Literature 24 (TR23.757)). In step ST1425, the MB-SMF notifies the AMF of a response to the multicast distribution request. In step ST1427, the AMF notifies the base station of a response to the multicast distribution request.

In step ST1429 illustrated in FIG. 14, the base station notifies the AMF of a response to the modification of session information relevant to multicast distribution. In step ST1430, the AMF notifies the SMF of a response to the modification of session information. For the notification, for example, processing of Nsmf_PDUSession_Update (see Non Patent Literature 29 (TS23.502)) may be used. In step ST1431, the SMF uses the notification to determine that it is not necessary to use the UPF, and notifies the AMF of the determination. The notification may include session management context.

In step ST1433 illustrated in FIG. 14, the MB-UPF transmits multicast data to the base station. In step ST1435, the base station transmits the multicast data to the UE. The multicast data transmission in step ST1435 is performed using the PTM leg.

In step ST1437 illustrated in FIG. 14, the UE confirms whether the t-reordering timer has expired. In response to confirming that the timer has not expired, the UE continues receiving the multicast data. In response to confirming that the timer has expired, the UE performs the process of step ST1439.

In step ST1439 illustrated in FIG. 14, the UE transmits the PDCP status report to the base station. The report may include information related to the lost PDCP PDU. The base station may determine whether to perform PTM/PTP switching using step ST1439. In the example illustrated in FIG. 14, the base station determines to switch from the PTM leg to the PTP leg for multicast communication to the UE.

In step ST1441 illustrated in FIG. 14, PTM/PTP switching is performed between the base station and the UE. That is, the base station switches the leg for multicast transmission to the UE from the PTM leg to the PTP leg. The base station may or may not notify the UE of the switching. For the notification, the base station may use RRC signaling, MAC signaling, or L1/L2 signaling. The base station may give the notification to the UE using an active leg: in the example of FIG. 14, the PTM leg. The notification using the PTM leg may include information related to the UE, information specifying the multicast, or information indicating that the switching is from the PTM leg to the PTP leg. The UE may switch the leg for use in multicast reception from the PTM leg to the PTP leg in response to the notification.

In step ST1442 illustrated in FIG. 14, the base station retransmits multicast data to the UE. The retransmission from the base station to the UE is performed using the PTP leg. The data to be retransmitted may be, for example, the lost PDCP PDU indicated by information included in the PDCP status report transmitted in step ST1439.

In step ST1443 illustrated in FIG. 14, the MB-UPF transmits multicast data to the base station. In step ST1445, the base station transmits the multicast data to the UE. The multicast data transmission in step ST1445 is performed using the PTP leg.

In step ST1447 illustrated in FIG. 14, the base station determines to switch the leg for multicast transmission to the UE from the PTP leg to the PTM leg. For example, the base station may make the determination in response to confirming that the PDCP PDU that is transmitted to the UE using the PTP leg is the same as or ahead of the PDCP PDU that is transmitted to another UE using the PTM leg, that is, the PDCP Sequence Number (SN) of the PDCP PDU that is transmitted using the PTP leg is equal to or greater than, or just greater than, the PDCP SN of the PDCP PDU that is transmitted using the PTM leg. The base station may or may not notify the UE of the switching. The notification from the base station to the UE may be similar to that in step ST1441. The UE may switch the leg for use in multicast reception from the PTP leg to the PTM leg in response to the notification.

In step ST1449 illustrated in FIG. 14, the MB-UPF transmits multicast data to the base station. In step ST1451, the base station transmits the multicast data to the UE. The multicast data transmission in step ST1451 is performed using the PTM leg.

In the example illustrated in FIG. 14, the PDCP status report is transmitted in response to the expiration of the t-reordering timer, but the UE may transmit the PDCP status report in response to the expiration of another timer. For example, a new timer may be provided. The timer may be, for example, a value shorter than the t-reordering timer. As a result, for example, the base station can transmit the PDCP PDU relevant to the multicast data to the UE before the t-reordering expires, and consequently, the UE can transfer the reordered multicast data to the upper layer.

In the example illustrated in FIG. 14, the PDCP status report is transmitted in response to the expiration of the t-reordering timer, but may be transmitted in response to another condition. For example, a condition related to the number of lost PDCP PDUs may be used, or a condition related to the number of lost RLC PDUs may be used. As a result, for example, the base station can quickly retransmit the lost multicast data to the UE.

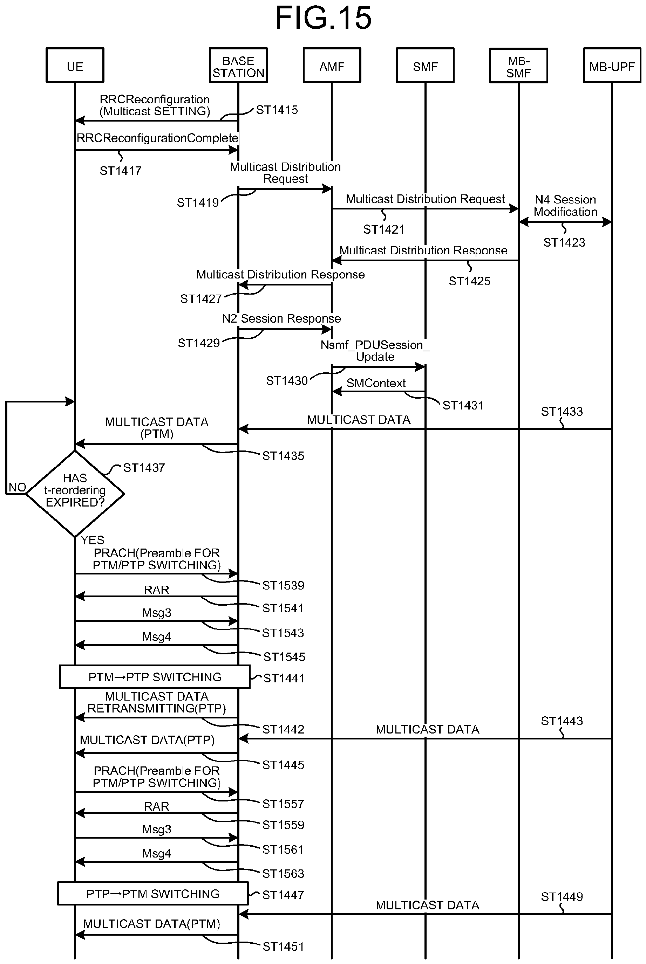

FIG. 15 is a sequence diagram illustrating another example of the operation of switching from the PTM leg to the PTP leg and switching from the PTP leg to the PTM leg in multicast transmission from the base station to the UE. FIG. 15 illustrates an example in which the UE gives a notification of the status related to multicast reception using the PRACH. FIG. 15 illustrates an example in which the notification is given in response to the expiration of the t-reordering timer. In FIG. 15, processes identical to those in FIG. 14 are denoted by the same step numbers, and descriptions already provided are omitted.

Steps ST1415 to ST1437 illustrated in FIG. 15 are similar to those in FIG. 14. In the signal to be transmitted in step ST1415, the base station may include information related to the range of the PRACH preamble for use in notification of information related to the multicast reception status, or information related to the PRACH preamble that the UE uses for notification of information related to the multicast reception status. Upon confirming in step ST1437 that the t-reordering timer has expired, the UE performs the process of step ST1539.

In step ST1539 illustrated in FIG. 15, the UE transmits the PRACH to the base station. The preamble for use in the PRACH may belong to a range different from the PRACH preamble for initial access and/or the PRACH preamble for System Information (SI) request. In addition, a PRACH preamble set from the base station may be used for notification of information related to the multicast reception status. In step ST1541, the base station transmits a Random Access Response (RAR) to the UE. The RAR transmitted in step ST1541 may include information related to the uplink grant for Msg3.

In step ST1543 illustrated in FIG. 15, the UE transmits Msg3 signaling for the random access process to the base station. The Msg3 signaling may include information related to a multicast retransmission request, information related to the multicast data requested to be retransmitted, information for identifying a multicast, information related to the lost PDCP PDU, or information related to a PTM/PTP switching request. In step ST1545, the base station transmits Msg4 signaling for the random access process to the UE.

Steps ST1441 to ST1445 illustrated in FIG. 15 are similar to those in FIG. 14.

In steps ST1557 to ST1563 illustrated in FIG. 15, processes similar to those in steps ST1539 to ST1545 are performed.

Steps ST1447 to ST1451 illustrated in FIG. 15 are similar to those in FIG. 14.

In the example illustrated in FIG. 15, the PRACH is transmitted in response to the expiration of the t-reordering timer, but may be transmitted in response to the expiration of another timer. For example, a new timer may be provided. The timer may be, for example, a value shorter than the t-reordering timer. As a result, for example, the base station can transmit the PDCP PDU relevant to the multicast data to the UE before the t-reordering expires, and consequently, the UE can transfer the reordered multicast data to the upper layer.

In the example illustrated in FIG. 15, the PRACH is transmitted in response to the expiration of the t-reordering timer, but may be transmitted in response to another condition. For example, a condition related to the number of lost PDCP PDUs may be used, or a condition related to the number of lost RLC PDUs may be used. As a result, for example, the base station can quickly retransmit the lost multicast data to the UE.

Steps ST1545 and ST1441 illustrated in FIG. 15 represent an example in which the Msg4 transmission from the base station to the UE and the switching from the PTM leg to the PTP leg are performed in different steps, but the Msg4 transmission and the switching may be performed in the same step. For example, the base station may determine the switching from the PTM leg to the PTP leg in response to the Msg3 transmission in step ST1543, or may notify the UE of Msg4 in step ST1545 including information related to the switching. The same may apply to steps ST1561, ST1563, and ST1447. As a result, for example, the amount of signaling between the base station and the UE can be reduced.

In the example illustrated in FIG. 15, four-step RACH is used, but two-step RACH may be performed. For example, steps ST1539 and ST1543 may be integrated as MsgA, or steps ST1541 and ST1545 may be integrated as MsgB. The same may apply to steps ST1557 to ST1563. As a result, for example, the random access process can be quickly executed.

In the example illustrated in FIG. 15, the RACH processing in steps ST1557 to ST1563 is performed in the switching from the PTP leg to the PTM leg, but the RACH processing in steps ST1557 to ST1563 need not be performed. For example, the base station may autonomously perform the process of switching from the PTP leg to the PTM leg. For example, the base station may switch from the PTP leg to the PTM leg in response to the value of the PDCP SN of the PDCP PDU that is transmitted using the PTP leg being equal to or greater than or just greater than the value of the PDCP SN of the PDCP PDU that is transmitted to another UE using the PTM leg. As a result, the switching from the PTP leg to the PTM leg can be quickly executed, and signaling between the base station and the UE can be reduced.

In the first embodiment, the PTM leg and the PTP leg for multicast are used by switching, but the PTM leg and the PTP leg may be used simultaneously. For example, multicast retransmission data may be transmitted and received using the PTP leg. As a result, for example, multicast efficiency in the communication system can be improved.

As another example of PTM/PTP switching, the base station may not send the request to the UE. The UE may be able to receive multicast using either leg. As a result, for example, PTM/PTP switching can be quickly executed between the base station and the UE. The UE determines which leg to use, PTM or PTP, using the reception result of PDCCH relevant to the multicast data. For example, if the PDCCH can be decoded using multicast RNTI, the UE may receive the multicast data using the PTM leg, and if the PDCCH can be decoded using C-RNTI, the UE may receive the multicast data using the PTP leg.

For example, the base station may transmit only the multicast data for retransmission using the PTP leg. As a result, for example, efficiency in multicast transmission can be improved. As another example, the base station may use the PTP leg for transmission to a UE with a poor propagation environment. As a result, for example, it is possible to prevent output of radio waves with excessive intensity to other UEs.

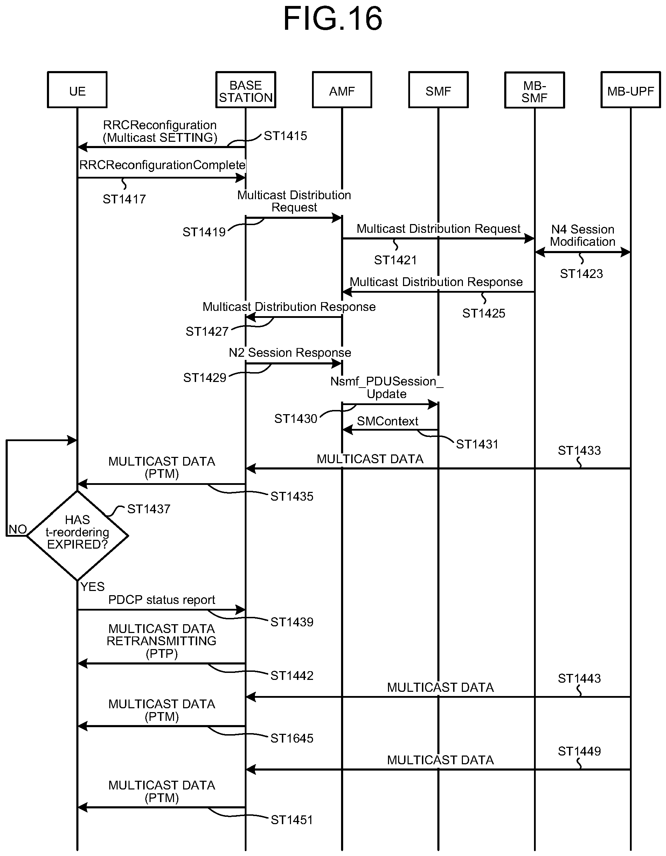

FIG. 16 is a sequence diagram illustrating an operation in which the PTM leg and the PTP leg are simultaneously used in multicast transmission from the base station to the UE. FIG. 16 illustrates an example in which the UE gives a notification of the status related to multicast reception using the PDCP status report. FIG. 16 illustrates an example in which the notification is given in response to the expiration of the t-reordering timer. In FIG. 16, processes identical to those in FIG. 14 are denoted by the same step numbers, and descriptions already provided are omitted.

Steps ST1415 to ST1433 illustrated in FIG. 16 are similar to those in FIG. 14.

In step ST1435 illustrated in FIG. 16, the base station transmits the multicast data to the UE. The transmission is performed using the PTM leg. The UE receives the data using the PTM leg. Because the PDCCH relevant to step ST1435 can be decoded using multicast RNTI, the UE determines to use the PTM leg.

Steps ST1437 to ST1439 illustrated in FIG. 16 are similar to those in FIG. 14.

In step ST1442 illustrated in FIG. 16, the base station retransmits multicast data to the UE. The retransmission is performed using the PTP leg. The UE receives the data using the PTP leg. Because the PDCCH relevant to step ST1442 can be decoded using C-RNTI, the UE determines to use the PTP leg.

Step ST1443 illustrated in FIG. 16 is similar to that in FIG. 14.

In step ST1645 illustrated in FIG. 16, the base station transmits the multicast data to the UE. The transmission is performed using the PTM leg. The UE receives the data using the PTM leg. Because the PDCCH relevant to step ST1645 can be decoded using multicast RNTI, the UE determines to use the PTM leg.

Step ST1449 illustrated in FIG. 16 is similar to that in FIG. 14.

Step ST1451 illustrated in FIG. 16 is similar to step ST1645.

In the example illustrated in FIG. 16, the PDCP status report is transmitted in response to the expiration of the t-reordering timer, but may be transmitted in response to the expiration of another timer. For example, a new timer may be provided. The timer may be, for example, a value shorter than the t-reordering timer. As a result, for example, the base station can transmit the PDCP PDU relevant to the multicast data to the UE before the t-reordering expires, and consequently, the UE can transfer the reordered multicast data to the upper layer.

In the example illustrated in FIG. 16, the PDCP status report is transmitted in response to the expiration of the t-reordering timer, but may be transmitted in response to another condition. For example, a condition related to the number of lost PDCP PDUs may be used, or a condition related to the number of lost RLC PDUs may be used. As a result, for example, the base station can quickly retransmit the lost multicast data to the UE.

In the example illustrated in FIG. 16, the PDCP status report is used, but RACH or RRC signaling may be used. As a result, for example, complexity in the communication system can be avoided.

In the PTM leg and the PTP leg, different carriers may be used, or different BWPs may be used. The base station may set, for the UE, different carriers or different BWPs as radio resources in the PTM leg and the PTP leg. As a result, for example, the PTM leg and the PTP leg can be quickly recognized in the UE.

The first embodiment enables notification of the multicast reception status from the UE to the base station, and consequently, the reliability of multicast can be improved.

### First Modification of First Embodiment.

The first modification discloses RLC entities for use in multicast transmission and reception in the first embodiment.

In the multicast transmission and reception in the communication system according to the first modification, both RLC-AM and RLC-UM entities may be connected to the PDCP having the PTM leg and the PTP leg.

For example, two RLC-UM entities and one RLC-AM entity may be connected to one PDCP. One of the two RLC-UM entities may be for transmission and the other for reception. For example, the two RLC-UM entities may be for the PTM leg, and the one RLC-AM entity may be for the PTP leg.

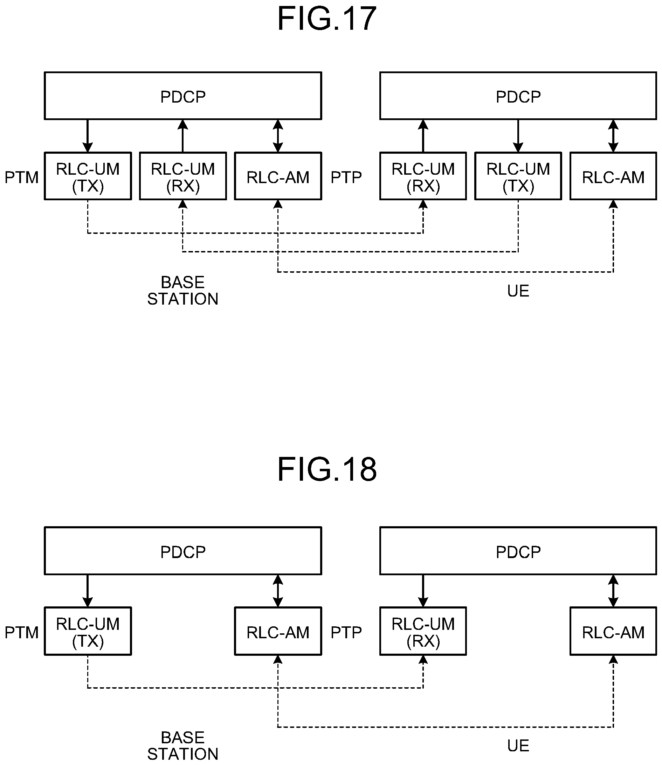

FIG. 17 is a diagram illustrating a configuration of PDCP entities and RLC entities for use in multicast that uses the PTM leg and/or the PTP leg. In FIG. 17, in both the base station and the UE, two RLC-UM entities are used for the PTM leg, and one RLC-AM entity is used for the PTP leg. One of the two RLC entities in the PTM leg is a transmitting entity and the other is a receiving entity. Between the base station and the UE, the RLC-UM transmitting entities correspond to the counterpart RLC-UM receiving entities. Regarding the PTP leg between the base station and the UE, the RLC-AM entities correspond to each other.

As another example, one RLC-UM entity and one RLC-AM entity may be connected to one PDCP. The RLC-UM entity in the UE may be a receiving RLC-UM entity. The RLC-UM entity in the base station may be a transmitting RLC-UM entity. For example, the RLC-UM entity may be for the PTM leg, and the RLC-AM entity may be for the PTP leg. As a result, for example, the memory usage required for multicast in the base station and the UE can be reduced.

FIG. 18 is a diagram illustrating another exemplary configuration of PDCP entities and RLC entities for use in multicast that uses the PTM leg and/or the PTP leg. In FIG. 18, in both the base station and the UE, one RLC-UM entity is used for the PTM leg, and one RLC-AM entity is used for the PTP leg. In the PTM leg of the base station, the transmitting RLC-UM entity is used. In the PTM leg of the UE, the receiving RLC-UM entity is used. The transmitting RLC-UM entity of the base station and the receiving RLC-UM entity of the UE correspond to each other. Regarding the PTP leg between the base station and the UE, the RLC-AM entities correspond to each other.

As another example, three RLC-UM entities may be connected to one PDCP. Two of the RLC-UM entities in the UE may be for reception and one for transmission. One of the RLC-UM entities in the base station may be for reception and two for transmission. For example, one transmitting RLC-UM entity and one receiving RLC-UM entity may be for the PTP leg, or one receiving RLC-UM entity in the UE and one transmitting RLC-UM entity in the base station may be for the PTM leg. As a result, for example, no RLC-AM entity is required, and consequently, the amount of processing in the base station and the UE can be reduced.

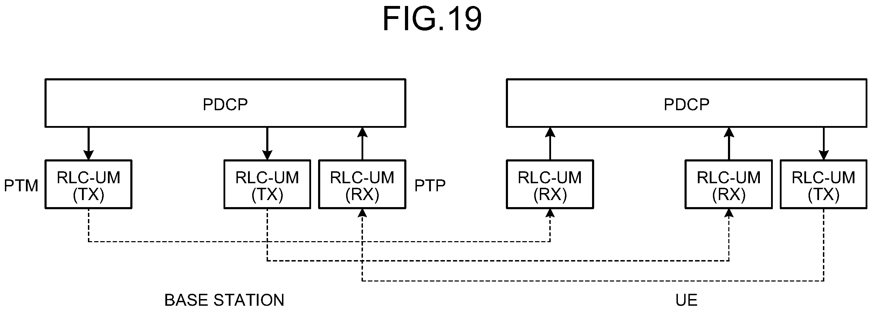

FIG. 19 is a diagram illustrating another exemplary configuration of PDCP entities and RLC entities for use in multicast that uses the PTM leg and/or the PTP leg. In FIG. 19, in both the base station and the UE, one RLC-UM entity is used for the PTM leg, and two RLC-UM entities are used for the PTP leg. In the PTM leg of the base station, the transmitting RLC-UM entity is used. In the PTM leg of the UE, the receiving RLC-UM entity is used. The transmitting RLC-UM entity of the base station and the receiving RLC-UM entity of the UE correspond to each other. One of the two RLC-UM entities in the PTP leg is a transmitting entity and the other is a receiving entity. Between the base station and the UE, the RLC-UM transmitting entities correspond to the counterpart RLC-UM receiving entities.

The base station may notify the UE of a configuration related to PDCP and/or RLC for use in multicast. The configuration may include information related to whether the PTP leg and/or the PTM leg is used, or information related to RLC entities in the PTP leg and the PTM leg, e.g. information related to whether the RLC entities are RLC-AM or RLC-UM, the number of RLC entities, and the necessity of transmitting and/or receiving RLC-UM entities. The configuration may include information related to the number of bits of PDCP SN to be described later. The UE may use the setting to set the PDCP and/or RLC layer for use in multicast reception. As a result, for example, flexibility in the communication system can be improved.

The operation of PDCP in multicast is disclosed below.

The operation of PDCP in multicast may be determined by the mode of the RLC entity connected.

For example, the PDCP to which at least one RLC-AM entity is connected may operate in the same manner as the PDCP in the AM DRB. For example, in the UE, the PDCP to which at least one RLC-AM entity is connected may transmit the PDCP status report to the base station. As a result, for example, multicast can be quickly retransmitted from the base station to the UE.

As another example, the PDCP to which at least one RLC-UM entity is connected may operate in the same manner as the PDCP in the UM DRB. For example, in the UE, the PDCP to which at least one RLC-UM entity is connected may not transmit the PDCP status report to the base station. The PDCP of the UE may give a notification of information related to the multicast reception status using the PRACH disclosed in the first embodiment, or may give a notification of information related to the multicast reception status using RRC signaling. As a result, for example, the amount of processing for use in the PDCP of the UE can be reduced.

As another example related to the operation of PDCP in multicast, the determination may be made based on the type of RLC entity in the PTP leg. For example, the PDCP that uses an RLC-AM entity for the PTP leg may operate in the same manner as the PDCP in the AM DRB. As a result, for example, reliability in multicast can be improved.

As another example, the operation of PDCP may be determined based on the type of RLC entity in the PTM leg. For example, the PDCP that uses an RLC-UM entity for the PTM leg may operate in the same manner as the PDCP in the UM DRB. As a result, for example, the amount of processing required for multicast can be reduced.

As another example related to the operation of PDCP in multicast, PDCP SN may be 18 bits. As a result, for example, it is possible to increase the buffer capacity for reordering or the like, and consequently, it is possible to buffer the data in the reordering queue for a long time.

As another example, PDCP SN may be 12 bits. As a result, for example, the header size of PDCP can be reduced, and consequently, throughput in multicast can be improved.

As another example, a different number of bits may be given to PDCP SN. For example, PDCPSN may be 10 bits. As a result, for example, the PDCP header does not require padding (see Non Patent Literature 27 (TS38.323)), and consequently, throughput in multicast can be improved.

The base station may determine the number of bits of PDCP SN and notify the UE of the number. As a result, for example, flexibility in the communication system can be improved.

As another example related to the operation of PDCP in multicast, sublayers may be provided in PDCP. For example, an operation common to the PDCP that uses an RLC-AM entity and the PDCP that uses an RLC-UM entity may be provided in a common layer of the sublayers, or an operation that varies between the PDCP that uses an RLC-AM entity and the PDCP that uses an RLC-UM entity may be provided in an individual layer of the sublayers. The function provided in the common layer may be, for example, discarding of duplicate PDCP PDUs, reordering, header compression, or integrity protection. The function provided in the individual layer may be, for example, recognition of lost PDCP or creation of the PDCP status report. In the UE and/or the base station, different individual layers may be connected to different RLC entities. As a result, for example, complexity in the design of the communication system can be avoided.

The first modification enables a flexible PDCP configuration based on the multicast configuration.

### Second Embodiment.

Multicast using the PTM and PTP legs may be used in DC.

However, architectures and setting methods for applying such multicast to DC are not disclosed in the already-formulated standards including Non Patent Literatures 1 to 33. Therefore, there is a possibility that malfunction may occur between the base station and the UE in the DC-based multicast.

The second embodiment discloses a solution to this problem.

In order to solve the above problem, the communication system according to the present embodiment sets the PTM leg and the PTP leg in the same base station in DC. The base station may be, for example, a master base station (also called a master node (MN)) or a secondary base station (also called a secondary node (SN)).

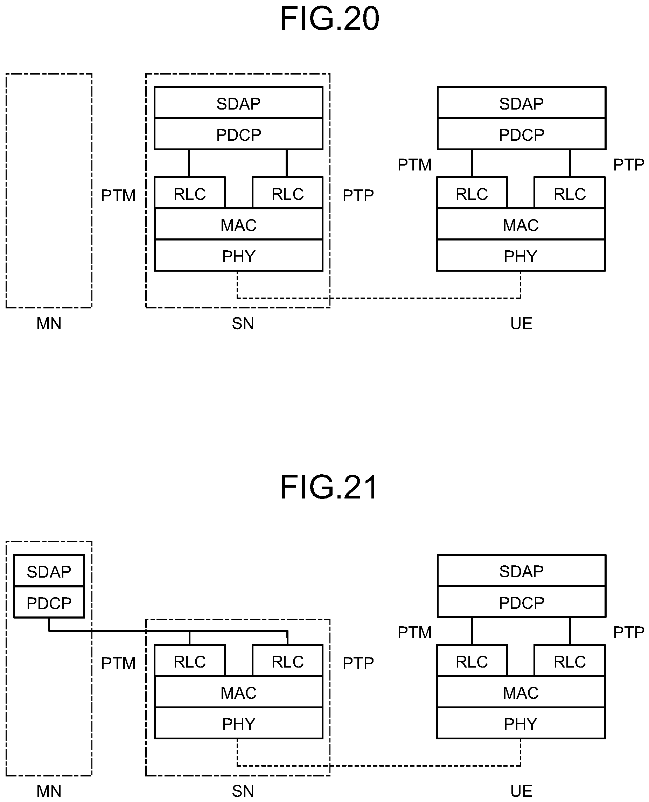

FIG. 20 is a diagram illustrating an architecture for multicast in DC. In FIG. 20, the SDAP layer and the PDCP layer are provided in the secondary base station, and both the PTM leg and the PTP leg are provided in the secondary base station (SN).

In the example illustrated in FIG. 20, multicast control may be performed by the master base station (MN). As a result, for example, the amount of processing in the secondary base station can be lowered. As another example, multicast control may be performed by the secondary base station. As a result, for example, the amount of processing in the master base station can be lowered.

The base station in which the PDCP layer for multicast is provided may be different from the base station in which the RLC layer and lower layers are provided. For example, the PDCP layer for multicast may be provided in the master base station, and the RLC layer and lower layers for the multicast may be provided in the secondary base station. As another example, the PDCP layer for multicast may be provided in the secondary base station, and the RLC layer and lower layers for the multicast may be provided in the master base station. As a result, for example, flexibility in the communication system can be improved.

FIG. 21 is a diagram illustrating another example of architecture for multicast in DC. In FIG. 21, the SDAP layer and the PDCP layer are provided in the master base station, and both the PTM leg and the PTP leg are provided in the secondary base station.

In the example illustrated in FIG. 21, the master base station and the MB-UPF may be connected to each other. Multicast control may be performed by the master base station. As a result, for example, the amount of processing in the secondary base station can be lowered.

Disclosed below are other solutions. In DC, the PTM leg and the PTP leg may be provided in different base stations. For example, the PTM leg may be provided in the master base station and the PTP leg in the secondary base station, or the PTP leg may be provided in the master base station and the PTM leg in the secondary base station. As a result, for example, it is possible to distribute the load of multicast across the base stations, and consequently, it is possible to increase the number of EUs that can be served in the communication system.

The PDCP layer for multicast may be provided in the master base station. As a result, for example, the RRC configuration from the master base station to the UE can be quickly executed.

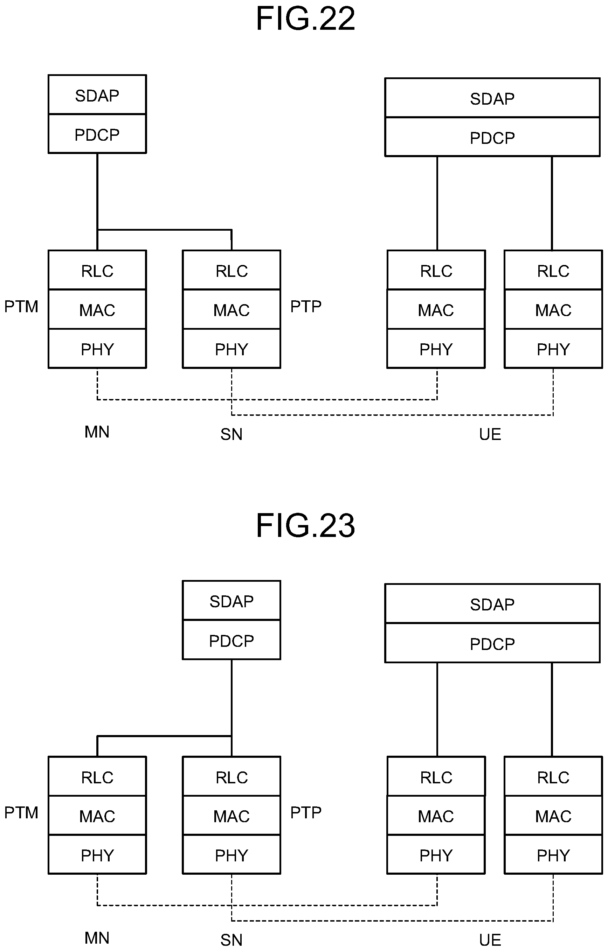

FIG. 22 is a diagram illustrating another example of architecture for multicast in DC. In FIG. 22, the SDAP layer and the PDCP layer are provided in the master base station. In addition, the PTM leg is provided in the master base station, and the PTP leg is provided in the secondary base station.

In the example illustrated in FIG. 22, the master base station and the MB-UPF may be connected to each other. Multicast control may be performed by the master base station. As a result, for example, the amount of processing in the secondary base station can be lowered.

As another example, the PDCP layer for multicast may be provided in the secondary base station. As a result, for example, the amount of processing in the master base station can be reduced.

FIG. 23 is a diagram illustrating another example of architecture for multicast in DC. In FIG. 23, the SDAP layer and the PDCP layer are provided in the secondary base station. In addition, the PTM leg is provided in the master base station, and the PTP leg is provided in the secondary base station.

In the example illustrated in FIG. 23, the secondary base station and the MB-UPF may be connected to each other. As a result, for example, latency in multicast transmission can be reduced. Multicast control may be performed by the master base station. As a result, for example, the amount of processing in the secondary base station can be lowered.

The base station may notify the UE of the setting of a bearer configuration for multicast. The base station may be, for example, a master base station. For the notification, for example, RRC signaling may be used. For example, signaling of RRCReconfiguration may be used. The setting may be establishment, addition, modification, switching, or deletion of a bearer configuration for multicast. The addition of a bearer configuration may be, for example, addition of a PTM leg and/or a PTP leg, addition of a new bearer associated with addition of a new multicast channel, or addition of a QoS flow relevant to a newly added multicast channel to the existing bearer. The modification of a bearer configuration may be, for example, modification of a parameter relevant to the bearer configuration. The switching of a bearer configuration may be, for example, switching of a base station having a PTM/PTP leg, or switching of a base station having SDAP and PDCP layers. The deletion of a bearer configuration may be, for example, deletion of a bearer relevant to multicast, deletion of a PTM leg and/or a PTP leg, or deletion of a QoS flow relevant to a multicast channel.

The signaling may include information related to the type of setting (e.g. establishment, addition, modification, switching, or deletion), a combination of logical channel identifiers relevant to multicast, information related to the type of PTM/PTP leg, the identifier of the UE in the PTM leg (e.g. G-RNTI), the identifier of the UE in the PTP leg (e.g. C-RNTI), or information on a cell group in which transmission and reception on each leg is performed, for example, information indicating whether the cell group is a master cell group or a secondary cell group. The UE may switch the bearer configuration for multicast using the information. As a result, for example, erroneous bearer setting by the UE can be prevented, and consequently, multicast malfunction can be prevented.

The master base station may notify the secondary base station of the setting of the bearer configuration. The signaling may be, for example, Xn signaling. The Xn signaling may be, for example, S-Node (SN) Modification Request (see Non Patent Literature 30 (TS38.423)). The setting may be establishment, addition, modification, switching, or deletion of the bearer configuration for multicast. As a result, for example, the secondary base station can quickly grasp the setting of the bearer configuration.

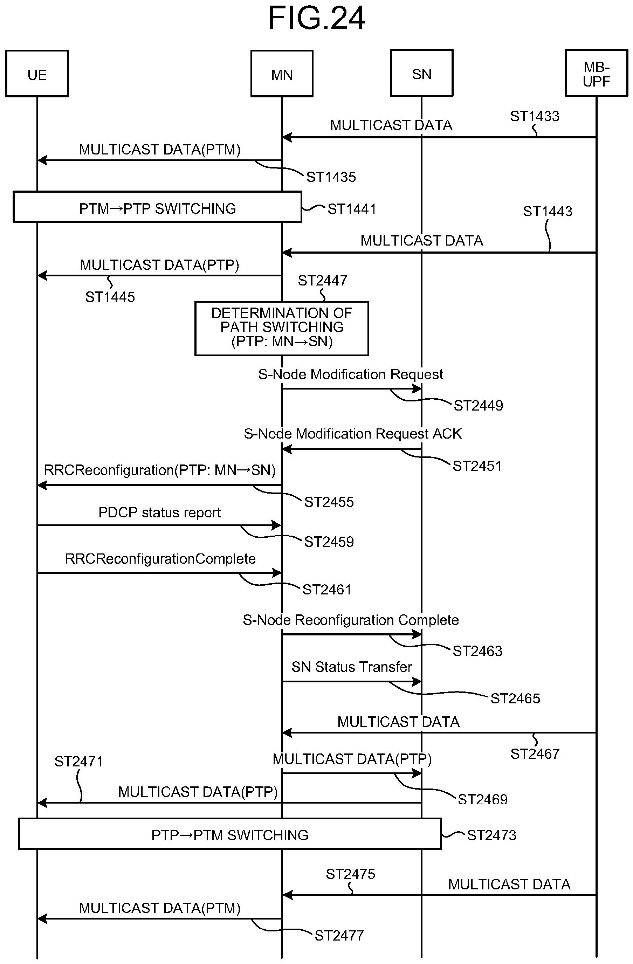

FIG. 24 is a sequence diagram illustrating the operation of setting a bearer configuration for multicast. In FIG. 24, the master base station (MN) includes the PTM leg. FIG. 24 illustrates an example in which the base station including the PTP leg is switched from the master base station to the secondary base station (SN). In FIG. 24, processes identical to those in FIG. 14 above are denoted by the same step numbers, and descriptions already provided are omitted.

Steps ST1433 to ST1445 illustrated in FIG. 24 are similar to those in FIG. 14.

In step ST2447 illustrated in FIG. 24, the MN determines to switch the PTP leg from the MN to the SN. The conditions for use in the determination may be, for example, the same as the conditions disclosed in the first embodiment, or the switching may be determined using the notification from the UE disclosed in the first embodiment.

In step ST2449 illustrated in FIG. 24, the MN notifies the SN of the switching of the path of the leg. For the notification, for example, signaling of S-Node (SN) Modification Request (see Non Patent Literature 30 (TS38.423)) may be used. In step ST2451, the SN notifies the MN of a response to step ST2449. In the example illustrated in FIG. 24, the notification is a positive response to step ST2449.

In step ST2455 illustrated in FIG. 24, the MN notifies the UE of the switching of the path of the PTP leg. For the notification, for example, signaling of RRCReconfiguration may be used. The notification may include information indicating that the path of the PTP leg is switched from the MN to the SN, or may include the configuration (e.g. RLC configuration, MAC configuration, or PHY configuration) related to the PTP leg after the switching to the SN. The UE reconfigures the PTP leg in response to step ST2455. In step ST2459, the UE notifies the MN of the PDCP status report. In step ST2461, the UE notifies the MN of the completion of the RRC reconfiguration. In step ST2463, the MN notifies the SN of the completion of the RRC reconfiguration for the secondary base station in the UE. In step ST2465, the MN notifies the SN of the status of the sequence number.

In step ST2467 illustrated in FIG. 24, multicast data is transmitted from the MB-UPF to the MN. In step ST2469, the MN transfers the multicast data to the SN. In step ST2471, the SN transmits the multicast data to the UE. The multicast data transmission in step ST2471 is performed using the PTP leg.

In step ST2473 illustrated in FIG. 24, the leg for multicast transmission is switched from PTP to PTM. The switching may be performed, for example, in a manner similar to the method disclosed in the first embodiment. For example, the MN may determine the switching in response to confirming that the PDCP PDU that is transmitted to the UE using the PTP leg is the same as or ahead of the PDCP PDU that is transmitted to another UE using the PTM leg, that is, the PDCP Sequence Number (SN) of the PDCP PDU that is transmitted using the PTP leg is equal to or greater than, or just greater than, the PDCP SN of the PDCP PDU that is transmitted using the PTM leg. The MN may notify the SN of the switching. The notification may be given using, for example, Xn interface. The SN may discard the multicast data accumulated in the buffer in response to the notification. As a result, for example, the memory usage in the SN can be reduced. As another example, the SN may notify the MN of information related to the multicast data confirmed to have been transmitted to the UE. The notification may include information related to the arrived RLC SN, information related to the PDCP SN, or information related to the NR-U sequence number disclosed in Non Patent Literature 31 (TS38.425). As a result, for example, the MN can quickly grasp the multicast data that has been transmitted to the UE. The MN may notify the UE of the switching. The notification may be given in the same manner as in step ST1441. In step ST2475, multicast data is transmitted from the MB-UPF to the MN. In step ST2477, the MN transmits the multicast data to the UE. The multicast data transmission in step ST2477 is performed using the PTM leg.

The base station may perform the switching of the bearer configuration for multicast using the load status in the base station itself, may perform the switching using the reporting result of the reception strength and/or reception quality of a downlink signal in the UE, or may perform the switching using the reception strength and/or reception quality of an uplink signal from the UE.

The master base station may notify the AMF of information related to each cell of the secondary base station, for example, information related to the coverage of each cell. The AMF may notify the MB-SMF of the information, or may request information related to the multicast service area from the MB-SMF. The MB-SMF may notify the AMF of information as to whether each cell of the secondary base station is within the multicast service area, or may notify the AMF of information related to the multicast service area. Using the information, the AMF may determine whether each cell of the secondary base station is within the multicast service area. The AMF may notify the master base station of the determination result. The master base station may notify the secondary base station of information related to multicast transmission availability. The information related to multicast transmission availability may be provided for each cell. The secondary base station may or may not perform multicast transmission using the information. As a result, for example, multicast transmission outside the service area of the secondary base station can be prevented.

As another example, the determination may be made by the master base station. The master base station may make the determination using information related to the multicast service area from the MB-SMF and/or information related to the coverage in each cell of the secondary base station. The master base station may notify the AMF of the determination result. As a result, for example, the amount of processing in the AMF can be reduced.

The second embodiment enables multicast in DC. In addition, it is possible to distribute the load of multicast in DC.

### Third Embodiment.

In a base station having a CU/DU separation configuration, multicast transmission that involves PTM/PTP switching may be performed. For example, the PTM leg and the PTP leg may be provided in the same DU.

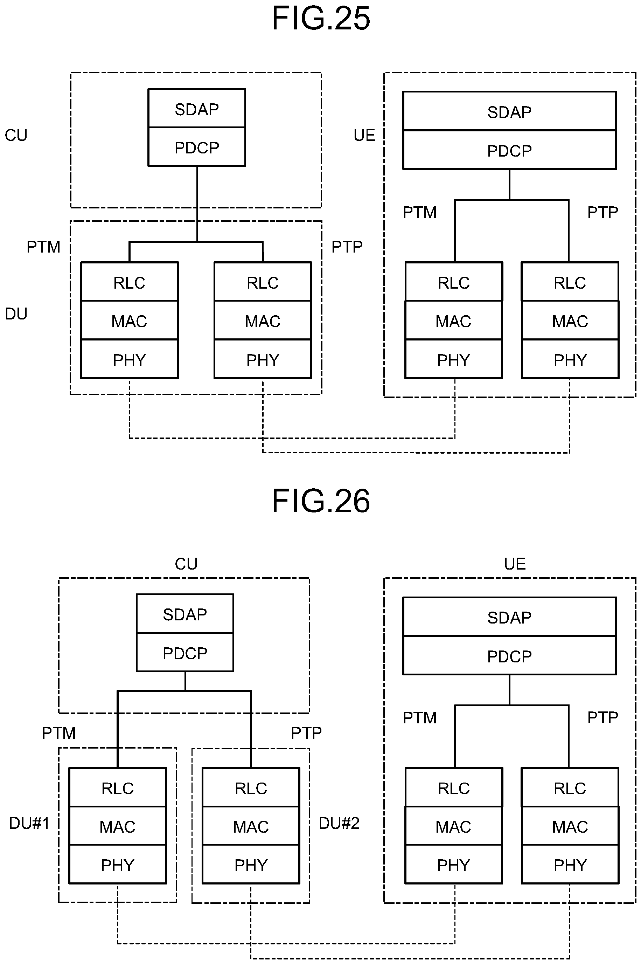

FIG. 25 is a diagram illustrating an architecture for multicast in a base station having a CU/DU separation configuration. In FIG. 25, the PTM leg and the PTP leg are provided in the same DU.

As another example, the PTM leg and the PTP leg may be provided in different DUs. As a result, for example, it is possible to distribute the load of multicast across the DUs.

FIG. 26 is a diagram illustrating another example of architecture for multicast in a base station having a CU/DU separation configuration. In FIG. 26, the PTM leg is provided in DU #1 and the PTP leg is provided in DU #2.

The CU may notify the DU of information related to multicast setting. For the notification, for example, Fl interface may be used. As examples of the information, (A) to (G) below are disclosed.
(A) Information indicating multicast.
(B) Information related to a radio bearer for use in multicast.
(C) Information related to QoS for multicast.
(D) Information related to a leg set in the DU.
(E) Information related to a PTM/PTP switching instruction.
(F) Information related to a PTM/PTP switching condition.
(G) Combinations of (A) to (F).

Information (A) may include, for example, information indicating whether it is multicast, or information for identifying a multicast, for example, the identifier of the multicast. With information (A), for example, the DU can identify a plurality of multicasts.

Information related to (B) may be, for example, MRB-ID. With information (B), for example, the DU can identify the bearer necessary for multicast transmission.

Information related to (C) may be, for example, 5G QoS Identifier (5QI) (see Non Patent Literature 21 (TS23.501)). With information (C), for example, the DU can perform optimal scheduling based on QoS.

Information related to (D) may include information indicating the PTM leg or the PTP leg, information related to information related to a logical channel that uses the leg (e.g. logical channel identifier), information related to the RLC that is used in the leg, for example, information related to the type of RLC entity, information related to MAC, or information related to a physical layer. With information (D), for example, the DU can set a leg for multicast transmission.

Information related to (E) may include, for example, information related to the post-switching leg. With information (E), for example, the DU can reduce the amount of processing in PTM/PTP switching.

Information related to (F) may include, for example, information related to a condition for switching from the PTM leg to the PTP leg, or may include information related to a condition for switching from the PTP leg to the PTM leg. The information related to a condition for switching may include, for example, information related to the items (1) to (5) disclosed in the first embodiment as conditions under which the UE transmits the PDCP status report, or information related to the predetermined value, range, count, and/or period in any of the items (1) to (4). The DU may switch between the PTM and PTP legs using the information. With information (F), for example, the DU can quickly execute PTM/PTP switching.

The DU may notify the CU of information related to the UE that receives multicast. For the notification, for example, Fl interface may be used. As examples of the information, (a) to (e) below are disclosed.
(a) Information related to UE that uses the PTM leg.
(b) Information related to UE that uses the PTP leg.
(c) Information related to UE relevant to PTM/PTP switching.
(d) Information related to values for use in condition determination of (1) to (5) above.
(e) Combinations of (a) to (d).

Information (a) may include information related to the number and/or identifiers of UEs that perform multicast reception using the PTM leg. With information (a), for example, the CU can grasp the number of UEs that use the PTM leg, and consequently can quickly determine the PTM/PTP switching.

Information (b) may include information related to the number and/or identifiers of UEs that perform multicast reception using the PTP leg. With information (b), for example, the CU can identify the UE that uses the PTP leg, and consequently can quickly determine the switching from the PTP leg to the PTM leg.

Information (c) may include information indicating that a PTM/PTP switching condition is satisfied, information (e.g. identifier) related to the UE that satisfies a PTM/PTP switching condition, or information related to the switching direction (e.g. from PTM leg to PTP leg, or from PTP leg to PTM leg). With information (c), for example, the CU can quickly grasp the UE which should perform PTM/PTP switching or for which PTM/PTP switching is performed.

Information (d) may include information related to the number of PDCP PDUs unconfirmed to have been transmitted to the UE, information related to the proportion of PDCP PDUs unconfirmed to have been transmitted to the UE, information related to the number of PDCP PDUs consecutively unconfirmed to have been transmitted to the UE, information related to the expiration of a timer that is used in the PDCP layer, for example, the t-reordering timer, information related to the number of RLC PDUs unconfirmed to have been transmitted to the UE, information related to the proportion of RLC PDUs unconfirmed to have been transmitted to the UE, information related to the number of RLC PDUs consecutively unconfirmed to have been transmitted to the UE, information related to the expiration of a timer that is used in the RLC layer, for example, the t-reassembly timer, information related to the HARQ retransmission excess count in the UE, information related to the HARQ retransmission excess count in the UE within a predetermined period, or information related to the HARQ retransmission excess count over a predetermined number of transport block transmissions. The CU may determine PTM/PTP switching using the information. As a result, for example, notification from the UE to the CU is not required, and consequently, the CU can quickly determine the switching.

Multicast transmission that involves PTM/PTP switching may be used in a base station in which the CU for the C-plane (CU-CP) and the CU for the U-plane (CU-UP) are separated. For example, for transmission of C-plane data and U-plane data, the same DU may be used. As another example, for transmission of C-plane data and U-plane data, different DUs may be used. As a result, for example, the load on the DUs can be lowered.

For example, the PTM leg and the PTP leg may be provided in the same DU. As a result, for example, complexity in the control of the DU can be avoided. As another example, the PTM leg and the PTP leg may be provided in different DUs. As a result, for example, the load on the DUs can be lowered.

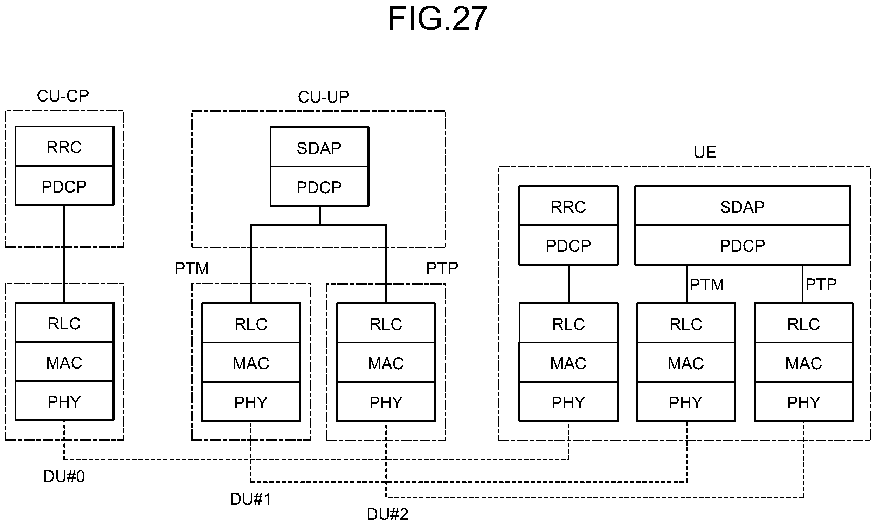

FIG. 27 is a diagram illustrating another example of architecture for multicast in a base station having a CU/DU separation configuration. In FIG. 27, the CU of the base station is divided into CU-CP and CU-UP. The leg relevant to the C-plane is provided in DU #0, the PTM leg of the U-plane is provided in DU #1, and the PTP leg of the U-plane is provided in DU #2.

The CU-CP may notify the CU-UP of information related to multicast setting. For the notification, for example, E1 interface may be used. The information may include the above-described information items (A) to (G). As a result, for example, the same effect as above can be obtained. The information may include information related to the DU to be used, for example, the identifier of the DU. The information related to the DU may include, for example, information that is used in the PTM leg and information that is used in the PTP leg. As a result, for example, the CU-UP can quickly identify the DU.

The CU-UP may notify the CU-CP of information related to the UE that receives multicast. For the notification, for example, E1 interface may be used. The information may include the above-described information items (a) to (e). As a result, for example, the same effect as above can be obtained.

The third embodiment enables multicast transmission from a base station having a CU/DU separation configuration.

### Fourth Embodiment.

5G base stations can support Integrated Access and Backhaul (IAB) (see Non Patent Literature 16 (TS38.300 V16.2.0)). That is, multicast may be performed using a base station that supports IAB (hereinafter may be referred to as an IAB base station). However, how multicast using IAB base stations is performed is not disclosed in the already-formulated standards including Non Patent Literatures 1 to 33. This causes the problem that multicast using IAB base stations cannot be executed.

The fourth embodiment discloses a method for solving this problem. Note that, in the following description, the CU and the DU of a base station operating as an IAB donor are referred to as an IAB donor CU and an IAB donor DU, respectively.

In order to solve the above problem, in the communications system according to the present embodiment, IAB donor DU and/or IAB node perform multicast transmission to IAB node and/or UE. All IAB donor DUs and IAB nodes may perform multicast transmission.

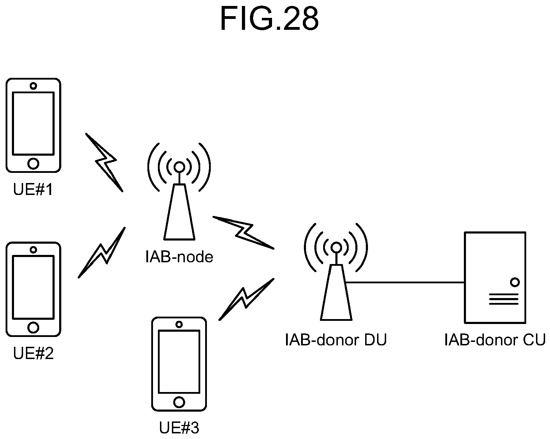

FIG. 28 is a connection diagram for multicast from base stations constituting IAB. In FIG. 28, the IAB donor CU and the IAB donor DU are connected by wire. The IAB donor DU performs multicast transmission to the IAB node and UE #3. The multicast transmission from the IAB donor DU may be performed using either PTP or PTM. The IAB node performs multicast transmission to UE #1 and UE #2. The multicast transmission from the IAB node may be performed using either PTP or PTM.

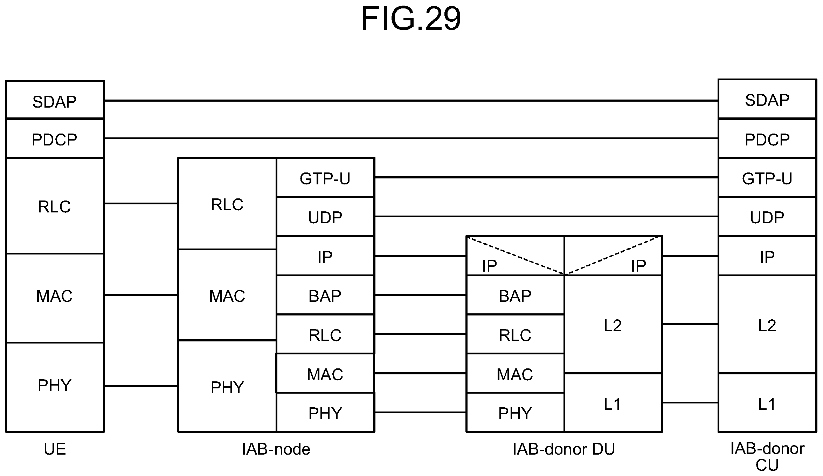

FIG. 29 is a protocol stack diagram for multicast transmission from base stations constituting IAB to UE. Between the IAB donor CU and the IAB donor DU, the L1, L2, and IP layers are terminated. In the IAB donor DU, IP routing is performed. Between the IAB donor DU and the IAB node, the PHY, MAC, RLC, Backhaul Adaption Protocol (BAP), and IP layers are terminated. Between the IAB donor CU and the IAB node, the User Datagram Protocol (UDP) and GPRS Tunneling Protocol for User Plane (GTP-U) layers are terminated. Between the IAB node and the UE, the PHY, MAC, and RLC layers are terminated. Between the IAB donor CU and the UE, the PDCP and SDAP layers are terminated.

Only some IAB donor DUs and/or IAB nodes may perform multicast transmission. In the multicast transmission, either the PTM leg or the PTP leg may be used. The IAB donor CU may determine an IAB donor DU and/or an IAB node that performs multicast transmission. The IAB donor DU and/or the IAB node may have information related to multicast transmission availability. The information may be included in the capability of the DU and/or the node, for example. The IAB donor DU and/or the IAB node may notify the IAB donor CU of the information. The IAB donor CU may use the information to determine a node to perform multicast transmission. The IAB donor CU may configure multicast transmission settings for the IAB donor DU and/or the IAB node. As a result, for example, flexibility in the communication system can be improved.

As another example related to a case where only some IAB donor DUs and/or IAB nodes perform multicast transmission, only IAB donor DUs and/or IAB nodes to which no subordinate IAB node is connected may perform multicast transmission. The multicast transmission may be, for example, multicast transmission using the PTM leg. As a result, for example, multicast complexity in the IAB can be avoided.

An IAB donor DU and/or an IAB node to which no subordinate IAB node is connected may perform multicast transmission. The multicast transmission may be, for example, multicast using the PTP leg. As a result, for example, multicast transmission to many UEs can be executed.

In IAB multicast transmission, the PTM and PTP legs may go through the same path. As a result, for example, complexity in the control of multicast can be avoided.

As another example, the multicast paths through the PTM leg and through the PTP leg may differ. As a result, for example, the flexibility of the communication system can be improved, and the load on IAB nodes can be lowered.

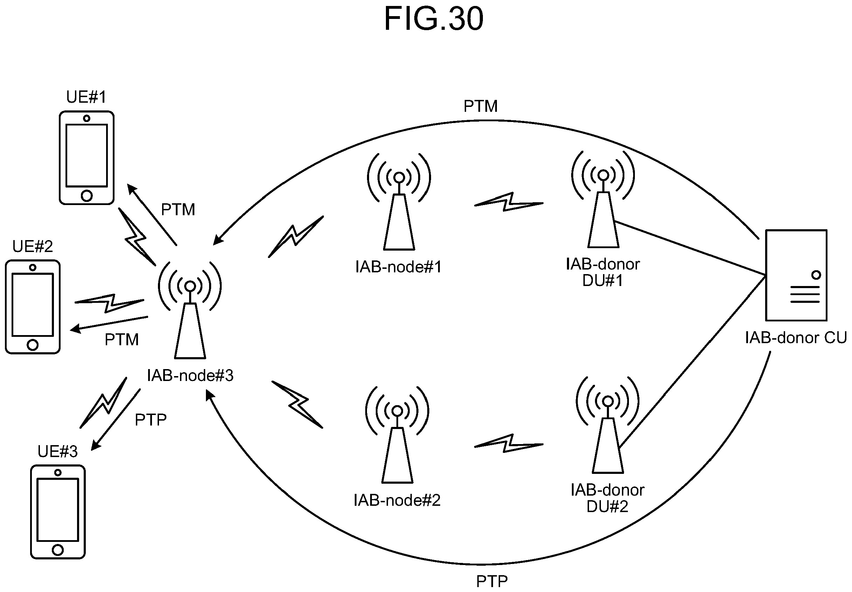

FIG. 30 is a diagram illustrating another example of connection for multicast from base stations constituting IAB. In FIG. 30, the IAB donor CU is connected to both IAB donor DU #1 and IAB donor DU #2 by wire. Multicast data for PTM is transmitted from IAB donor DU #1 to IAB node #1. Multicast data for PTP is transmitted from IAB donor DU #2 to IAB node #2. Multicast data for PTM is transmitted from IAB node #1 to IAB node #3. Multicast data for PTP is transmitted from IAB node #2 to IAB node #3. IAB node #3 performs multicast transmission to UEs #1 to #3. IAB node #3 transmits multicast data for PTM to UE #1 and UE #2. IAB node #3 transmits multicast data for PTP to UE #3.

The fourth embodiment enables multicast transmission from base stations supporting IAB.

### Fifth Embodiment.

Packet duplication may be used in multicast transmission. For example, packet duplication may be used in the configurations disclosed in the first to fourth embodiments. The UE may receive PDCP PDUs transmitted from both the PTM and PTP legs. The UE may retain only the PDCP PDU that arrived first and discard the PDCP PDU with the same PDCP SN that arrived later.

Packet duplication using CA may be used in multicast transmission. Different cells may be used in the multicast transmission/reception using the PTM leg and the multicast transmission/reception using the PTP leg. As a result, for example, even in a case where the same base station, DU, and/or IAB node is used for the PTM leg and the PTP leg, it is possible to improve the reliability of multicast transmission by frequency diversity.

Packet duplication using DC may be used in multicast transmission. The multicast transmission using PTM and the multicast transmission using PTP may be performed using different base stations, using different DUs, or using different IAB nodes. As a result, for example, the effect of space diversity is obtained in multicast, and consequently, reliability in multicast can be improved.

A plurality of PTM legs may be provided. A plurality of PTP legs may be provided. Packet duplication in which DC and CA are combined may be used in multicast transmission. For example, one PTM leg and one PTP leg may be provided in both the master base station and the secondary base station, or one base station may be equipped with a PTM leg and another base station may be equipped with a plurality of PTP legs. As a result, for example, the effects of both frequency diversity and space diversity can be obtained in multicast, and consequently, the reliability of multicast can be improved.

The fifth embodiment allows for improved reliability in multicast.

In the present disclosure, a UE-TX is defined as a UE in which service data is generated. For example, given that a UE-TX is UE1 and a UE-RX is UE2, in cases where service data is generated in UE2 and data is transmitted to UE1, the method of the present disclosure can be applied by treating UE2 as a UE-TX and UE1 as a UE-RX. As a result, a similar effect can be obtained.

The above-described embodiments and modifications thereof are merely examples, and the embodiments and modifications thereof can be freely combined. Any component of the embodiments and modifications thereof can be appropriately changed or omitted.

For example, in the above-described embodiments and modifications thereof, a subframe is an example of a unit of time for communication in the fifth-generation communication systems. A subframe may be a unit of scheduling. In each of the above-described embodiments and modifications thereof, subframe-unit processes may be performed as TTI-unit, slot-unit, subslot-unit, or minislot-unit processes.

For example, the methods disclosed in above-described embodiments and modifications thereof may be applied not only to vehicle-to-everything (V2X) services but also to services using SL communication. For example, the methods may be applied to SL communication that is used in various types of services such as proximity-based services, public safety, communication between wearable terminals, and communication between factory devices.

Although the present disclosure has been described in detail, the above description is illustrative and not restrictive in all aspects. Numerous modifications not illustrated are considered as assumable.

### Reference Signs List

200, 210 communication system; 202 communication terminal device (mobile terminal); 203, 207, 213, 217, 223-1, 224-1, 224-2, 226-1, 226-2, 750 base station device (base station); 204 MME/S-GW unit (MME unit); 204a MME; 214 AMF/SMF/UPF unit (5GC unit); 218 central unit; 219 distributed unit; 301, 403 protocol processing unit; 302 application unit; 303, 404 transmission data buffer unit; 304, 405 encoder unit; 305, 406 modulation unit; 306, 407 frequency conversion unit; 307-1 to 307-4, 408-1 to 408-4 antenna; 308, 409 demodulation unit; 309, 410 decoder unit; 310, 411, 506, 526 control unit; 401 EPC communication unit; 402 other base station communication unit; 412 5GC communication unit; 501 PDN GW communication unit; 502, 522 base station communication unit; 503, 523 user plane communication unit; 504 HeNBGW communication unit; 505, 525 control plane control unit; 505-1, 525-1 NAS security unit; 505-2 SAE bearer control unit; 505-3, 525-3 Idle State mobility management unit; 521 Data Network communication unit; 525-2 PDU session control unit; 527 session management unit; 751-1 to 751-8 beam.

## Claims

1. A communication system comprising:
a base station conforming to New Radio Access Technology; and
a communication terminal capable of performing multicast communication with the base station, wherein
while executing the multicast communication, the communication terminal transmits reception status information to the base station in communication with the communication terminal, the reception status information being information related to a data reception status, and
the base station performs control of retransmission of data to the communication terminal on a basis of the reception status information.

2. The communication system according to claim 1, wherein
the base station performs multicast transmission of data, using one or both of point-to-multipoint communication and point-to-point communication.

3. The communication system according to claim 1 or 2, wherein
the base station determines, on the basis of the reception status information, whether to perform data retransmission by point-to-multipoint communication or by point-to-point communication.

4. The communication system according to any one of claims 1 to 3, wherein
the base station uses point-to-multipoint communication for initial transmission of data, and uses point-to-point communication for retransmission of data.

5. The communication system according to any one of claims 1 to 3, wherein
in a state in which retransmission of data is required, the base station uses point-to-point communication for both retransmission of data and initial transmission of subsequent data.

6. The communication system according to any one of claims 1 to 3, wherein
in a state in which retransmission of data is required, the base station uses point-to-point communication for retransmission of data, and uses point-to-multipoint communication for initial transmission of subsequent data.

7. The communication system according to any one of claims 1 to 6, wherein
the communication terminal is connected to two base stations, and receives data multicast by one of the two base stations connected thereto.

8. The communication system according to any one of claims 1 to 7, wherein
the base station includes a central unit and a distributed unit.

9. The communication system according to any one of claims 1 to 8, wherein
the base station supports Integrated Access and Backhaul.

10. A communication terminal capable of performing multicast communication with a base station of a communication system to which New Radio Access Technology is applied, wherein
while executing the multicast communication, the communication terminal transmits reception status information to the base station in communication with the communication terminal, the reception status information being information related to a data reception status.

11. The communication terminal according to claim 10, wherein
the communication terminal transmits the reception status information, using a status report of Packet Data Convergence Protocol.

12. The communication terminal according to claim 10, wherein
the communication terminal transmits the reception status information, using Physical Random Access Channel.

13. The communication terminal according to any one of claims 10 to 12, wherein
the communication terminal periodically transmits the reception status information.

14. The communication terminal according to any one of claims 10 to 13, wherein
the communication terminal transmits the reception status information when a predetermined condition is satisfied.
